# EUROPÄISCHE PATENTSCHRIFT

(11) **EP 3 632 040 B1**
(45) Veröffentlichungstag und Bekanntmachung des Hinweises auf die Patenterteilung: **21.07.2021**
(21) Anmeldenummer: 18726119.3
(22) Anmeldetag: 17.05.2018
(51) Int. Cl.: H04L 12/24, H04L 12/40

(54) **VERARBEITUNG VON PROZESSDATEN**
PROCESSING OF PROCESS DATA
TRAITEMENT DE DONNÉES DE PROCESSUS

(30) Priorität: 24.05.2017 DE 102017208831
(43) Veröffentlichungstag der Anmeldung: 08.04.2020
(73) Patentinhaber: WAGO Verwaltungsgesellschaft mbH, 32423 Minden (DE)
(72) Erfinder: JEROLM, Daniel, 49152 Bad Essen (DE)
(74) Vertreter: Daum, Patrick
(86) Internationale Anmeldenummer: PCT/EP2018/062958
(87) Internationale Veröffentlichungsnummer: WO 2018/215299

(56) Entgegenhaltungen:
- EP-A1- 2 093 941
- DE-A1-102010 030 811
- US-A1- 2012 151 017

## Beschreibung

### 1. Gebiet der Erfindung

Die Erfindung betrifft im Allgemeinen die Verarbeitung von Prozessdaten und im Speziellen die Verarbeitung von Prozessdaten an Datenbusteilnehmern eines Lokalbusses mit Hilfe von Instruktionslisten.

### 2. Stand der Technik

Ein Lokalbus kommt zumeist in einer Automatisierungsanlage zum Einsatz. Automatisierungsanlagen werden insbesondere zur Steuerung von industriellen Anlagen, Gebäuden sowie von Verkehrsmitteln eingesetzt. Für die Steuerung einer Automatisierungsanlage sind zumeist mehrere Sensoren und Aktoren notwendig. Diese überwachen und steuern den von der Anlage ausgeführten Prozess. Die unterschiedlichen Sensoren und Aktoren einer Automatisierungsanlage werden dabei häufig auch als Automatisierungsgeräte bezeichnet.

Diese Automatisierungsgeräte können entweder direkt mit einer Steuerung der Automatisierungsanlage verbunden werden, oder können zunächst mit Ein- und Ausgangsmodulen, die häufig auch als E/A-Module bezeichnet werden, verbunden werden. Diese können dann wiederum direkt mit der Steuerung verbunden werden. Die Automatisierungsgeräte können dabei entweder direkt in den E/A-Modulen integriert sein oder können mit diesen über Kabel oder kabellos verbunden sein.

Die Steuerung einer Automatisierungsanlage wird in der Regel mit Hilfe einer oder mehrerer speicherprogrammierbaren Steuerungen, SPS, bewerkstelligt. Die SPSs können dabei hierarchisch oder dezentral in einer Automatisierungsanlage angeordnet sein. Dabei gibt es bei den SPS unterschiedliche Leistungsklassen, so dass diese je nach Rechen- und Speicherkapazität unterschiedliche Steuerungen und Regelungen übernehmen können. Eine SPS hat im einfachsten Fall Eingänge, Ausgänge, ein Betriebssystem (Firmware) und eine Schnittstelle, über die ein Anwenderprogramm geladen werden kann. Das Anwenderprogramm legt fest, wie die Ausgänge in Abhängigkeit von den Eingängen geschaltet werden sollen. Dabei können die Eingänge und Ausgänge mit den Automatisierungsgeräten und/oder den E/A-Modulen verbunden werden und anhand der im Anwenderprogramm hinterlegten Logik kann der Prozess, der von der Automatisierungsanlage durchgeführt wird, überwacht beziehungsweise gesteuert werden. Dabei wird die Überwachung des Prozesses durch die Sensoren bewerkstelligt und die Steuerung des Prozesses durch die Aktoren. Die Steuerung kann auch als zentrale Steuerung oder Zentraleinheit bezeichnet werden und übernimmt zumindest für ein mit der Steuerung verbundenes Automatisierungsgerät oder E/A-Modul die Steuerung.

Allerdings ist das direkte Verbinden der Automatisierungsgeräte mit der zumindest einen Steuerung oder der E/A-Module mit der zumindest einen Steuerung in Form einer parallelen Verdrahtung, d.h. von jedem Automatisierungsgerät oder jedem E/A-Modul wird je eine Leitung zur übergeordneten Steuerung verlegt, sehr aufwendig. Gerade bei steigendem Automatisierungsgrad einer Automatisierungsanlage wächst der Verkabelungsaufwand bei paralleler Verdrahtung. Dies ist mit großem Aufwand bei der Projektierung, Installation, Inbetriebnahme und Wartung verbunden.

Daher werden heutzutage in der Automatisierungstechnik zumeist Bussysteme eingesetzt, mit denen die Automatisierungsgeräte beziehungsweise die E/A-Module an die Steuerung angeschlossen werden können. Um die Anbindung der einzelnen Automatisierungsgeräte beziehungsweise der E/A-Module mit dem Bussystem noch weiter zu vereinfachen, werden heutzutage häufig einzelne Gruppen von Automatisierungsgeräten beziehungsweise E/A-Modulen mit Hilfe eines spezialisierten Lokalbusses zunächst untereinander zu einem Lokalbussystem verbunden. Anschließend wird zumindest ein Teilnehmer dieses Lokalbusses mit dem Bussystem verbunden, welches mit der Steuerung verbunden ist. Dabei kann sich das Lokalbussystem von dem Bussystem unterscheiden, welches eingesetzt wird, um die Verbindung mit der Steuerung zu realisieren.

Der mit dem Bussystem der Steuerung verbundene Teilnehmer einer Gruppe von Lokalbusteilnehmern wird häufig auch als Lokalbusmaster bezeichnet. Alternativ wird auch die Bezeichnung Kopfstation des Lokalbussystems verwendet. Dieser Lokalbusmaster kann gegenüber anderen Lokalbusteilnehmer weitere Logiken, Schaltungen oder Funktionalitäten beinhalten, die zur Anbindung an das Bussystem der Steuerung notwendig sind. Auch kann der Lokalbusmaster selbst eine SPS beinhalten. Auch kann dieser Teilnehmer Logiken und Schaltungen zur Umsetzung zwischen den zwei Bussystemen aufweisen. Der Lokalbusmaster kann daher auch als Gateway oder Busumsetzer ausgebildet sein und sorgt für eine Umsetzung der im Format des einen Bussystems vorliegenden Daten in das Format des Lokalbussystems. Zumeist aber nicht zwingend, ist der Lokalbusmaster auf die Anbindung des Lokalbusses an den übergeordneten Bus spezialisiert.

Die zum Einsatz kommenden Lokalbusse sind zumeist auf die speziellen Einsatzerfordernisse der Automatisierungsgeräte beziehungsweise E/A-Module abgestimmt oder berücksichtigen deren spezielle Hardwareausgestaltung. Dabei bilden die Gruppen an Automatisierungsgeräten beziehungsweise E/A-Modulen des Lokalbussystems zumeist eine Untergruppe der Automatisierungsanlage zur Ausführung einer speziellen Aufgabe in dem von der Automatisierungsanlage ausgeführten Prozess. Die auf den Bussen ausgetauschten Daten für den Prozess werden auch häufig als Lokalbusdaten oder Prozessdaten bezeichnet, weil diese Daten Informationen zur Regelung beziehungsweise Steuerung des von der Automatisierungsanlage ausgeführten Prozesses beinhaltet. Diese Daten können dabei unter anderem Messdaten, Steuerungsdaten, Zustandsdaten und/oder andere Informationen umfassen. Entsprechend des verwendeten Busprotokolls können diesen Daten andere Daten vorangestellt (*engl.* Header) oder angehängt (*engl.* Tail) sein. Diese anderen Daten können Informationen bezüglich der Daten beinhalten, oder Informationen bezüglich einer internen Kommunikation auf dem Lokalbus beinhalten. Hierbei ist eine Vielzahl von unterschiedlichen Informationen bekannt, die entsprechend des verwendeten Busprotokolls den Prozessdaten vorangestellt oder angefügt werden. Die an einen Lokalbus angeschlossenen Lokalbusteilnehmer können auch als Datenbusteilnehmer bezeichnet werden, weil diese Daten auf dem Lokalbus austauschen. Ein Datenbusteilnehmer kann dabei zum Steuern oder Überwachen eines Prozesses dienen, insbesondere durch eine Ausgabe von Steuersignalen z.B. an Aktoren und/oder durch einen Empfang von Messsignalen z.B. von Sensoren. Der Datenbusteilnehmer setzt die Steuersignale und/oder Messsignale in Prozessdaten für den Lokalbus um oder umgekehrt. Die Datenbusteilnehmer können auch als Lokalbusteilnehmer bezeichnet werden.

Ein Beispiel eines Lokalbusses ist ein Ringbus, der eine spezialisierte Form des Lokalbusses darstellt, wie zum Beispiel aus US 5,472,347 A bekannt. In einem Ringbus sind die Datenbusteilnehmer, zum Beispiel die Automatisierungsgeräte beziehungsweise E/A-Module, jeweils mit ihren direkt benachbarten Datenbusteilnehmer verbunden und Daten werden der Reihe nach von einem zum anderen Datenbusteilnehmer weitergeleitet. Es werden also nicht allen Datenbusteilnehmern gleichzeitig die Daten zugesandt, sondern der Reihe nach, wobei ein Datenbusteilnehmer von seinem vorgelagerten Datenbusteilnehmer Daten erhält und Daten an seinen nachgelagerten Datenbusteilnehmer weiterleitet. Zwischen dem Erhalt der Daten und der Weiterleitung kann der Datenbusteilnehmer die erhaltenen Daten verarbeiten. Wenn die Daten den letzten Datenbusteilnehmer in der Reihe erreicht haben, so werden die Daten vom letzten Datenbusteilnehmer wieder der Reihe nach zurück an den ersten Datenbusteilnehmer zurückgeleitet. Das Zurückleiten kann dabei entweder durch alle Datenbusteilnehmer geschehen oder an diesen vorbei mit Hilfe einer Bypassleitung. Der Ringbus hat also einen Abwärtsstrom und Aufwärtsstrom von Daten. Die Daten in einem Ringbus werden meist in Form von Datenpaketen übertragen, die alle Datenbusteilnehmer durchlaufen.

Für die Verarbeitung der in den Datenpaketen vorhandenen Prozessdaten hat jeder Datenbusteilnehmer eine feste, also statische, Programmierung. Soll diese geändert werden, so muss der Datenbusteilnehmer, beispielsweise im Rahmen eines Firmwareupdates, umprogrammiert werden, wie zum Beispiel in US 2012/0151017 A1 beschrieben, oder der Datenbusteilnehmer muss ersetzt werden. Dies führt bei bekannten Ringbussystemen dazu, dass die Arbeit des Ringbusses unterbrochen werden muss. Der vom Ringbus ausgeführte Prozess der Automatisierungsanlage ist dementsprechend für eine bestimmte Zeit unterbrochen.

Aufgabe der vorliegenden Erfindung ist es daher, ein Verfahren bereitzustellen, mit dem eine möglichst weitgehende Verkürzung von Unterbrechungszeiten des ausgeführten Prozesses möglich ist.

### 3. Zusammenfassung der Erfindung

Diese Aufgabe wird mit dem Verfahren des unabhängigen Anspruchs gelöst.

Vorteilhafte Ausführungsformen sind in den Unteransprüchen beschrieben.

Das erfindungsgemäße Verfahren zur Verarbeitung von Prozessdaten durch Datenbusteilnehmer eines Lokalbusses, insbesondere eines Ringbusses, weist das Empfangen von zumindest einer Instruktionsliste an einem Datenbusteilnehmer auf, wobei die zumindest eine Instruktionsliste einen Satz von Instruktionen zum Verarbeiten von Prozessdaten beinhaltet. Dabei kann der Satz von Instruktionen aber auch nur eine Instruktion beinhalten. Empfangen werden kann die Instruktionsliste dabei beispielsweise über eine Schnittstelle zur Anbindung an den Lokalbus beispielsweise über eine Kommunikation mit einem Lokalbusmaster des Lokalbusses. Bevorzugt erfolgt die Kommunikation mittels Adressierung, indem beispielsweise der Lokalbusmaster die Instruktionsliste an die Adresse des Datenbusteilnehmers sendet. Alternativ ist es möglich, die Instruktionsliste über eine Schnittstelle verschieden von der Schnittstelle zur Anbindung an den Lokalbus zu empfangen. Beispielsweise kann die Instruktionsliste über eine separate Programmierschnittstelle des Datenbusteilnehmers empfangen werden. Die Instruktionen der Instruktionsliste können unterschiedlichste Verarbeitungsschritte vorgeben, die mit den Prozessdaten durchgeführt werden sollen. Die zumindest eine Instruktionsliste enthält dabei Instruktionen, die ein Regelwerk zur Verarbeitung der Prozessdaten vorgeben. Das Regelwerk definiert beispielsweise welche Prozessdaten von einem Datenbusteilnehmer aus einem auf dem Lokalbus durchlaufenden Datenstrom selektiert werden sollen, welche gelesen werden sollen, oder an welchen Stellen vom Datenbusteilnehmer Prozessdaten geschrieben werden sollen, und/oder welche Prozessdaten der Datenbusteilnehmer auf andere Art und Weise manipulieren soll. Ein Datenbusteilnehmer kann auch mehrere Instruktionslisten empfangen. Jeder Datenbusteilnehmer kann je nach der von diesem Datenbusteilnehmer auszuführenden Aufgabe mehrere verschiedene Instruktionslisten aufweisen, wobei jede der Instruktionslisten ein unterschiedliches Verhalten des Datenbusteilnehmers in Bezug auf die zu verarbeitenden Prozessdaten definieren kann.

Das erfindungsgemäße Verfahren weist weiter auf das Speichern der zumindest einen Instruktionsliste in einem Speicher. Das Speichern kann dabei alle Arten des Vorhaltens der empfangenen zumindest einen Instruktionsliste umfassen. Es ist dabei nur von Bedeutung, dass der Datenbusteilnehmer Zugriff auf die empfangene zumindest eine Instruktionsliste hat, d.h. Zugriff auf den Speicher hat. Entsprechend kann die zumindest eine Instruktionsliste in dem Datenbusteilnehmer selbst gespeichert werden, beispielsweise in einem Speicher des Datenbusteilnehmers, oder in einem mit dem Datenbusteilnehmer verbundenen Speicher. Die Verbindung zwischen Datenbusteilnehmer und Speicher kann dabei kabelgebunden oder kabellos geschehen. Auch ist denkbar, dass der Speicher ein Zusatzmodul ist, welches mit dem Datenbusteilnehmer verbunden werden kann. Der Speicher kann beliebig ausgestaltet sein.

Das erfindungsgemäße Verfahren weist weiter auf, Empfangen von einem Instruktionslistenindex. Dieser Instruktionslistenindex informiert den Datenbusteilnehmer darüber, welche gespeicherte Instruktionsliste verwendet werden soll zur Verarbeitung von Prozessdaten. Ein Instruktionslistenindex ist also einer Instruktionsliste zugeordnet oder umgekehrt, so dass mit Hilfe des Instruktionslistenindexes die zu verwendende Instruktionsliste identifiziert werden kann. Hierzu weist der Instruktionslistenindex bevorzugt einen Wert auf, der zugeordnet ist zu einer Instruktionsliste, beispielsweise weist der Wert auf eine bestimmte Instruktionsliste hin oder auf deren Speicherplatz. Dazu kann der Wert selbst die Speicheradresse sein, wo die Instruktionsliste gespeichert ist oder wo zumindest eine erste Instruktion der Instruktionsliste gespeichert ist. Alternativ oder zusätzlich kann der Wert auch auf einen Speicherbereich hinweisen, in dem die entsprechende Instruktionsliste abgespeichert ist. In den zuvor genannten Fällen kann auch von einer direkten Zuordnung gesprochen werden. Der Wert des Instruktionslistenindex kann beispielsweise aber auch verwendet werden, als Eingabe einer Umsetzungstabelle (*engl.* Lookup-Tabelle, LUT). Dabei ist der Wert des Instruktionslistenindex der Eingangswert der Umsetzungstabelle. Der Ausgangswert der Umsetzungstabelle kann die Speicheradresse der ersten Instruktion in der zugehörigen Instruktionsliste sein oder anderweitig die Instruktionsliste identifizieren. Die Umsetzungstabelle kann softwaretechnisch sowie hardwaretechnisch in Form von beispielsweise Logiken hinterlegt sein und eine eineindeutige Umsetzung von einem Eingangswert in einen Ausgangswert angeben, wobei der Ausgangswert einen Hinweis auf die zu verwendende Instruktionsliste gibt. Dabei hängt es von der Umsetzungstabelle ab, wie ein Zusammenhang zwischen dem Instruktionslistenindex und der Instruktionsliste hergestellt wird. Bei der Verwendung einer Umsetzungstabelle kann auch von einer indirekten Zuordnung gesprochen werden. Bei der direkten sowie indirekten Zuordnung ist aber über den Instruktionslistenindex die von dem Datenbusteilnehmer zu verwendende Instruktionsliste eineindeutig identifizierbar, d.h. auffindbar. Es kann beispielsweise immer genau ein Instruktionslistenindex genau einer Instruktionsliste zugeordnet sein oder umgekehrt. D.h. mit jedem Instruktionslistenindex ist zumindest genau eine Instruktionsliste auffindbar bzw. eineindeutig identifizierbar.

Weiter weist das erfindungsgemäße Verfahren auf, Auswählen einer der zumindest einen gespeicherten Instruktionsliste basierend auf dem empfangenen Instruktionslistenindex. Es wird also eine gespeicherte Instruktionsliste dann ausgewählt, wenn der Instruktionslistenindex der gespeicherten Instruktionsliste, beispielweise mittels des LUT, zugeordnet ist. Die ausgewählte Instruktionsliste wird dann durch den Datenbusteilnehmer ausgeführt zum Verarbeiten von Prozessdaten empfangen durch den Datenbusteilnehmer. Es wird also der Satz von Instruktionen der ausgewählten Instruktionsliste abgearbeitet. Enthält der Instruktionslistenindex einen Verweis auf eine Instruktionsliste, die am Datenbusteilnehmer nicht vorhanden ist, so kann der Datenbusteilnehmer einen Fehler melden. Auch kann der Datenbusteilnehmer den Instruktionslistenindex ignorieren und keine Instruktionsliste für die Prozessdaten abarbeiten. In dem letzten Fall bleiben die vom Datenbusteilnehmer empfangenen Prozessdaten unverändert.

Mit Hilfe der Instruktionslisten, die während des Betriebs einzelnen Datenbusteilnehmern zugesandt werden können, ist es möglich, die Datenbusteilnehmer zu programmieren, ohne dass die zyklische Datenübertragung über den Lokalbus für die Ausführung eines Prozesses unterbrochen werden muss. Die Instruktionslisten können dabei während des Betriebs nachgeladen werden oder dem aktuell verwendeten Instruktionslistenindex nicht zugeordnete Instruktionslisten können verändert oder entfernt werden. Mit Hilfe des Instruktionslistenindexes ist es dann möglich, von einer zur anderen Instruktionsliste nahtlos zu wechseln. Es ist dazu nur notwendig, nach der Speicherung der neuen Instruktionslisten den zugeordneten Instruktionslistenindex zu senden. Eine neue Initialisierung oder Unterbrechung des Lokalbusses ist nicht notwendig. Mit Hilfe der Umschaltung der Verarbeitung mittels der Instruktionslisten ist es auch möglich, die Arbeitsweise des Ringbusses für unterschiedliche Steuerungen anzupassen. Mit dem erfindungsgemäßen Verfahren ist es daher besonders einfach, eine Umprogrammierung oder Umkonfigurierung und ein Hinzufügen und Entfernen von Datenbusteilnehmern eines Ringbusses auch während des Betriebs zu ermöglichen.

In einer bevorzugten Ausführungsform des erfindungsgemäßen Verfahrens werden die zu verarbeitenden Prozessdaten in einem Datenpaket empfangen. Ein Datenpaket welches Prozessdaten trägt kann auch als Prozessdatenpaket bezeichnet werden. Das Prozessdatenpaket weist die Prozessdaten auf, die von den Datenbusteilnehmern des Lokalbusses gesendet und/oder empfangen werden. Vorteilhafterweise weist das Prozessdatenpaket keine Adresse zur Übertragung der Prozessdaten an einen oder von einem Datenbusteilnehmer im Lokalbus auf. In dem Prozessdatenpaket sind die Prozessdaten derart angeordnet, dass Datenbusteilnehmer auf Grund der jeweiligen Position der Prozessdaten in dem Prozessdatenpaket, beispielsweise ein oder mehrere Bits innerhalb eines zugeordneten zusammenhängenden Datenblocks (1 Byte), diejenigen dem jeweiligen Datenbusteilnehmer zugehörigen Prozessdaten erkennen können. Vorteilhafterweise weist das Prozessdatenpaket eine Kennung (IDE) auf, die dem Typ des Datenpakets, also dem Prozessdatenpaket zugeordnet und durch den Datenbusteilnehmer identifizierbar ist.

Der Instruktionslistenindex kann entweder direkt vor den Prozessdaten oder in einem definierten Abstand vor den Prozessdaten empfangen werden. Der Instruktionslistenindex und die Prozessdaten können dabei im gleichen Prozessdatenpaket angeordnet sein. Alternativ kann der Instruktionslistenindex auch separat von den Prozessdaten empfangen werden. Dies ist insbesondere dann vorteilhaft, wenn der Instruktionslistenindex sich nicht bei jedem Datenpaket oder gar bei jedem Zyklusrahmen ändert. In diesem Fall kann der Instruktionslistenindex auch nur einmal gesendet werden, und dieser Instruktionslistenindex wird dann so lange von den Datenbusteilnehmern zur Verarbeitung von Prozessdaten verwendet, bis ein neuer Instruktionslistenindex empfangen wird. Bevorzugt ist aber eine stringente Kopplung des Instruktionslistenindexes mit den zu verarbeitenden Prozessdaten. Wird in diesem Fall ein Prozessdatenpaket ohne Instruktionslistenindex empfangen, so kann der Datenbusteilnehmer einen Fehler melden oder der Datenbusteilnehmer wird die Prozessdaten ignorieren.

In einer bevorzugten Ausführungsform des erfindungsgemäßen Verfahrens wird die Instruktionsliste in einem Datenpaket empfangen. Ein Datenpaket welches die Instruktionsliste trägt kann auch als Kommunikationsdatenpaket bezeichnet werden. Ein Kommunikationsdatenpaket trägt keine Prozessdaten und dient insbesondere zum Programmieren und/oder zum Steuern und/oder zum Überwachen und/oder zum Identifizieren zumindest eines Datenbusteilnehmers. Vorteilhafterweise weist das Kommunikationsdatenpaket eine Adresse auf, die mindestens einem Datenbusteilnehmer zugeordnet ist. Vorzugsweise ist der Datenbusteilnehmer eingerichtet, die Adresse auszuwerten und das Kommunikationsdatenpaket entsprechend zu verarbeiten.

Die Prozessdatenpakete und die Kommunikationsdatenpakete können auch als Telegramme bezeichnet werden. Ein Telegramm weist beispielsweise Header, Payload und vorteilhafterweise eine Prüfsumme auf.

Die Prozessdatenpakete und die Kommunikationsdatenpakete können in einer Zyklusrahmenkommunikation an die Datenbusteilnehmer gesendet werden. Dabei können die die jeweiligen Datenpakete in einem oder unterschiedlichen Zyklusrahmen an die Datenbusteilnehmer gesendet werden.

Ein Zyklusrahmen kann dabei beispielsweise als ein wiederkehrendes (zyklisches) vorzugsweise äquidistantes Zeitintervall, in dem Daten auf dem Lokalbus übertragbar sind, definiert werden. Der Zyklusrahmen weist beispielsweise zumindest eine Startkennung (SOC) und einen Zeitbereich zur Übertragung von Daten auf. Mehrere Startkennungen (SOC) aufeinander folgender Zyklusrahmen sind dabei vorteilhafterweise in einem zeitlich äquidistanten Abstand zueinander. Der genannte Zeitbereich ist für die Übertragung der Datenpakete vorgesehen. Die Startkennung (SOC) und die Datenpakete werden über den Lokalbus übertragen und durchlaufen alle Datenbusteilnehmer. Die Startkennung (SOC) ist separat, also als eigenständiges Symbol übertragbar oder vorteilhafterweise in einem Startdatenpaket (SOC-Paket) enthalten.

Innerhalb des Zeitbereichs des Zyklusrahmens werden keine, ein oder mehrere Datenpakete übertragen. Vorteilhafterweise werden in einem Zyklusrahmen Leerlauf-Daten (Idle-Data) eingefügt, insbesondere angrenzend an zumindest ein Datenpaket. Vorteilhafterweise bewirkt die Übertragung der Datenpakete und/oder der Leerlauf-Daten ein ununterbrochenes Signal auf dem Lokalbus. Das Signal ermöglicht es den Datenbusteilnehmern, sich auf dieses zeitlich zu synchronisieren. Vorteilhafterweise weist der Zyklusrahmen zusätzlich einen Trailer auf. Der Trailer hat eine variable Länge und folgt auf den Zeitbereich zur Datenübertragung vorzugsweise bis zur folgenden Startkennung (SOC) des nächsten Zyklusrahmens. Vorteilhafterweise weist der Trailer Leerlauf-Daten auf.

Die Zyklusrahmen werden vorzugsweise originär vom Lokalbusmaster erzeugt. Im Rahmen der Erzeugung fügt der Lokalbusmaster von der Steuerung, beispielsweise einer SPS, empfangene Prozessdaten in die entsprechenden Prozessdatenpakete der Zyklusrahmen ein, die Prozessdaten können aber auch vom Lokalbusmaster selbst stammen. Während des Durchlaufs der Prozessdatenpakete durch die Datenbusteilnehmer des Lokalbusses können sich die Prozessdaten allerdings ändern, bedingt durch Verarbeitungen durch die Datenbusteilnehmer, wobei die Verarbeitung durch die Instruktionen der unterschiedlichen Instruktionslisten vorgegeben ist.

In einer weiteren bevorzugten Ausführungsform des erfindungsgemäßen Verfahrens weisen das Prozessdatenpaket und das Kommunikationsdatenpaket eine Anzahl von Symbolen auf, wobei jedes Symbol eine Anzahl von Bits aufweist, beispielsweise 8 Bits also 1 Byte. Es ist dem Fachmann aber bewusst, dass die Stückelung der Datenpakete auch in anderen Einheiten geschehen kann, die mehr oder weniger als 8 Bits umfassen. Die Datenpakete durchlaufen den Lokalbus in Form dieser Symbole, d.h. einheitenweise, stückchenweise, oder Teile weise. Ein derartiger Teil der Datenpakete wird im Folgenden auch als Stück oder Einheit bezeichnet. D.h. die Datenbusteilnehmer haben zu jeder gegebenen Zeit immer nur einen Teil der Datenpakete vorliegen. Dabei empfängt ein Datenbusteilnehmer symbolweise die Datenpakete. Nach Verarbeitung eines Symbols sendet der Datenbusteilnehmer das gerade bearbeitete Symbol an den nachgelagerten Datenbusteilnehmer weiter und empfängt im gleichen Schritt von dem vorgelagerten Datenbusteilnehmer ein neues Symbol usw.

In einer bevorzugten Ausführungsform des erfindungsgemäßen Verfahrens ist der Instruktionslistenindex in jedem Datenpaket mit Prozessdaten an einer vorbestimmten Stelle innerhalb des Datenpakets angeordnet. Dabei ist dem Datenbusteilnehmer die vorbestimmte Stelle innerhalb des Datenpakets bekannt. Demzufolge ist der Datenbusteilnehmer vorteilhafterweise eingerichtet, die vorbestimmte Stelle innerhalb des Datenpakets zu ermitteln und den Instruktionslistenindex an der vorbestimmten Stelle auszulesen. Vorteilhafterweise ist der Instruktionslistenindex innerhalb eines Daten-Symbols angeordnet, das in seiner Gesamtheit in den Datenbusteilnehmer geladen wird, so dass der Datenbusteilnehmer mit Auswertung des Daten-Symbols der Instruktionslistenindex zur Auswahl der Instruktionsliste zur Verfügung steht. Die vorbestimmte Stelle innerhalb des Datenpakets ist vorzugsweise durch einen bestimmten Abstand von einem eindeutig erkennbaren Bestandteil des Datenpakets definiert. Beispielweise ist die vorbestimmte Stelle durch eine konstante Anzahl von Bits oder Symbolen als Abstand von einem erkennbaren Kopf (*engl.* header) beziehungsweise einer erkennbaren Kennung (IDE) angeordnet.

In einer weiteren bevorzugten Ausführungsform des erfindungsgemäßen Verfahrens weist das Speichern der Instruktionslisten zusätzlich ein Erstellen eines Verweises in dem Datenbusteilnehmer auf. Der Verweis kann dabei an einer bestimmten Position im Speicher des Datenbusteilnehmers oder in einem Register des Datenbusteilnehmers gespeichert werden. Alternativ oder zusätzlich kann der Verweis auch in einem mit dem Datenbusteilnehmer verbundenen Speicher hinterlegt werden. Der empfangene Instruktionslistenindex kann dann beispielsweise den Index des entsprechenden Verweise angeben, und der Verweis selbst kann auf die Position im Speicher oder im Register hinweisen, in dem die Instruktionsliste gespeichert ist, die mit dem Instruktionslistenindex verknüpft ist. Mittels des Instruktionslistenindexes lässt sich dann über den Verweis die entsprechende Instruktionsliste auffinden. Auf diese Art ist die Instruktionsliste dem Instruktionslistenindex indirekt zugeordnet. Dabei kann beispielsweise jeder Datenbusteilnehmer im Speicher eine indizierbare Liste von Verweisen aufweisen, zum Beispiel 16 Verweise, die über ihre Position in der Liste indiziert sind. Welcher der Verweise zur Auswahl der Instruktionsliste verwendet werden soll, wird über den Instruktionslistenindex bestimmt. Der Instruktionslistenindex kann dabei beispielsweise einen Wert aufweisen, der die Position des Verweises in der indizierten Liste angibt. Es wird dann dementsprechend derjenige Verweis auf eine Instruktionsliste verwendet, der an der durch den Instruktionslistenindex angegebenen Position in der indizierbaren Liste vorgehalten wird. Auch wenn hier eine Liste als Speicherobjekt genannt wurde, ist dem Fachmann klar, dass jegliches andere indizierbare Speicherobjekt verwendet werden kann. Weist der Instruktionslistenindex einen Wert auf, für den der Datenbusteilnehmer keine entsprechende Instruktionsliste und damit auch keinen Verweis hat, so kann der Datenbusteilnehmer den Instruktionslistenindex ignorieren und keine Instruktion wird ausgeführt. Alternativ ist es in einem derartigen Fall aber auch möglich, dass der Datenbusteilnehmer einen Fehler meldet. Die Verwendung des Verweises hat den Vorteil, dass der zu übertragende Instruktionslistenindex sehr klein gehalten werden kann, im Sinne von Datenvolumen im Datenpaket, da dieser nur den entsprechenden Verweis indizieren muss. D.h. einem Instruktionslistenindex können ein oder mehrere Instruktionslisten zugeordnet sein, weil der eine Datenbusteilnehmer mit dem gleichen Instruktionslistenindex eine andere Instruktionsliste aufruft als ein anderer Datenbusteilnehmer. Die Zuordnung hängt einzig und allein von der im Datenbusteilnehmer hinterlegten Verweisung ab.

Der Verweis kann auch noch weitergehend verwendet werden. Es kann beispielsweise vorkommen, dass manche Datenbusteilnehmer weniger Instruktionslisten haben als andere. Damit aber nicht unterschiedliche Instruktionslistenindexe an die unterschiedlichen Datenbusteilnehmer gesendet werden müssen, sondern alle mit dem gleichen Instruktionslistenindex arbeiten können, können für mehrere Instruktionslistenindizes die gleichen Verweise verwendet werden. Mit anderen Worten, auch wenn die Instruktionslistenindizes verschieden sind, weist der über den Instruktionslistenindex auffindbare Verweis doch auf die gleiche Instruktionsliste hin. Somit ist es auch nicht nötig mehrere Kopien einer Instruktionsliste vorzuhalten.

In einer weiteren bevorzugten Ausführungsform ist es auch denkbar, dass das Speichern der Instruktionslisten an einen vorher bestimmten Speicherplatz im Speicher geschieht und der Instruktionslistenindex einen Verweis aufweist, der auf den vorher bestimmten Speicherplatz hinweist. Dabei kann der Verweis die Speicheradresse selbst sein, oder der Instruktionslistenindex weist einen Wert auf, der vom Datenbusteilnehmer hardwartechnisch ausgewertet werden kann, beispielsweise durch die Verwendung von Logiken, und so auf den Speicherplatz hinweist wo die Instruktionsliste gespeichert ist. In diesem Fall kann davon gesprochen werden, dass der Speicherplatz der Instruktionslisten hart verdrahtet ist im Datenbusteilnehmer und der Instruktionslistenindex die Hardware des Datenbusteilnehmers dazu veranlasst, eine spezielle dem Instruktionslistenindex zugeordnete Instruktionsliste zu verwenden.

Verweise können auch verwendet werden, um einen nahtlosen Übergang von einer verwendeten Instruktionsliste zu einer anderen Instruktionsliste durchzuführen. Beispielsweise kann beim Hinzufügen eines Datenbusteilnehmers im Ringbus, diesem neuen Datenbusteilnehmer, beispielsweise in einer Kommunikation, d.h. in einer Kommunikation in der dem Datenbusteilnehmer beispielsweise keine Prozessdaten gesendet werden, von dem Lokalbusmaster eine neue Instruktionsliste zugesandt werden. Der Lokalbusmaster kann, beispielsweise gleichzeitig, alle vorher im Lokalbus befindlichen Datenbusteilnehmer anweisen, einen neuen Verweis zu erstellen und zwar einen Verweis, der über einen bis dahin noch nicht verwendeten Instruktionslistenindex auffindbar ist. Dieser neue Verweis wird aber derart erstellt, dass dieser auf die aktuell von dem jeweiligen Datenbusteilnehmer verwendete Instruktionsliste hinweist. Das Speicherobjekt welches die Verweise hält weist in diesem Fall zumindest zwei Verweise auf, die auf die gleiche Instruktionsliste hinweisen, die aber über unterschiedliche Instruktionslistenindizes auffindbar sind. Auch der neu hinzugefügte Datenbusteilnehmer wird angewiesen einen Verweis auf seine neu empfangene Instruktionsliste zu erstellen, wobei dieser Verweis auch über den bis dahin noch nicht verwendeten Instruktionslistenindex auffindbar ist. Wenn dieser Prozess beendet ist, so kann der Lokalbusmaster den bis dahin noch nicht verwendeten Instruktionslistenindex verwenden. Der neue Datenbusteilnehmer wird dann seine neue Instruktionsliste verwenden, wohingegen die anderen Datenbusteilnehmer zwar einen neuen Instruktionslistenindex empfangen, dieser aber auf den Verweis hinweist, der auf die zuvor genutzte Instruktionsliste hinweist. Diese Datenbusteilnehmer verwenden daher immer noch die gleiche Instruktionsliste wie vor dem Hinzufügen des weiteren Datenbusteilnehmers. Alternativ ist es auch möglich, dass die bisherigen Datenbusteilnehmer ebenfalls neue Instruktionslisten erhalten, die dem neuen, bisher nicht verwendeten Instruktionslistenindex zugeordnet sind, z.B. in dem Fall, wenn der Prozess neue Abhängigkeiten mit dem neu hinzugefügten Datenbusteilnehmer, beispielweise eine neu zu berücksichtigende Messgröße, aufweist. Mit den Verweisen ist es somit möglich, einen nahtlosen Übergang während des Betriebs zu schaffen, auch wenn ein Datenbusteilnehmer hinzugefügt wird. Ähnlich können Verweise aber auch verwendet werden, wenn insbesondere den bestehenden Datenbusteilnehmern neue Instruktionslisten gesendet werden sollen oder alte entfernt werden sollen. Auch hierbei ist ein nahtloser Übergang mit Hilfe von Verweisen in den Datenbusteilnehmern möglich, die die gleichen Instruktionslisten bzw. unterschiedliche Instruktionslisten vor und nach einer Änderung verwenden sollen. Hierzu werden beispielsweise von dem Lokalbusmaster neue Instruktionslisten für die Datenbusteilnehmer erzeugt. Der Lokalbusmaster kann dann den Datenbusteilnehmern die neuen Instruktionslisten zusenden und die Datenbusteilnehmer anweisen, einen neuen Verweis zu erstellen und zwar einen Verweis, der über einen bis dahin noch nicht verwendeten Instruktionslistenindex auffindbar ist. Dieser neue Verweis weist auf die neu empfangene Instruktionsliste hin. Ab einem bestimmten Zeitpunkt nach der Anweisung kann der Lokalbusmaster dann den bis dahin ungenutzten Instruktionslistenindex verwenden. D.h. es ist eine Umprogrammierung der Datenbusteilnehmer während des laufenden Betriebs möglich, ohne dass es zu Unterbrechungen kommt. Nachdem der neue Instruktionslistenindex verwendet wird, kann der zuvor verwendete Instruktionslistenindex und damit der entsprechende Verweis auf die zuvor verwendete Instruktionsliste freigegeben werden und der Verweis sowie die zuvor genutzte Instruktionsliste können gelöscht beziehungsweise überschrieben werden.

Erfindungsgemäß werden zumindest zwei Instruktionslisten vom Datenbusteilnehmer empfangen. Dabei kann eine erste Instruktionsliste von den zumindest zwei empfangenen Instruktionslisten einen ersten Satz von Instruktionen für Prozessdaten in einer ersten Anordnung innerhalb eines Prozessdatenpakets umfassen und die zweite Instruktionsliste von den zumindest zwei empfangenen Instruktionslisten kann einen zweiten Satz von Instruktionen für Prozessdaten in einer zweiten Anordnung innerhalb eines Prozessdatenpaktes umfassen. Beispielsweise werden die erste Anordnung und die zweite Anordnung in zwei unterschiedlichen, insbesondere aufeinander folgenden Datenpaketen empfangen. Dabei kann die erste Anordnung verschieden sein von der zweiten Anordnung. Beispielsweise kann bei einem Werkzeugwechsel an einem Aktor, der an einen Datenbusteilnehmer angeschlossen ist, eine andere Verarbeitung nötig werden, weil in diesem Fall auch andere für das neue Werkzeug spezifische Prozessdaten, d.h. beispielsweise Bits, im Datenpaket übertragen werden. D.h. die erste Instruktionsliste kann beispielsweise vor dem Werkzeugwechsel verwendet werden, wohingegen die zweite Instruktionsliste nach dem Werkzeugwechsel verwendet wird.

Die Verwendung unterschiedlicher Instruktionslisten kann auch vorteilhaft sein, wenn der Lokalbusmaster unterschiedliche Anordnungen von Prozessdaten in das Prozessdatenpaket kopiert. Beispielweise kann der Lokalbusmaster mit verschiedenen Steuerungen verbunden sein, die Formate verwenden in denen Prozessdaten unterschiedlich angeordnet sind. Beispielsweise können die Bits der Prozessdaten in einem Feldbustelegramm nach einem ersten Standard anders angeordnet sein als in einem Feldbustelegramm nach einem zweiten Standard. Wenn der Lokalbusmaster die Prozessdaten aus diesen Formaten in ein entsprechendes Prozessdatenpaket kopiert, so kann die erste Instruktionsliste verwendet werden zur Verarbeitung von Prozessdaten stammend von der ersten Steuerung und die zweite Instruktionsliste kann verwendet werden zur Verarbeitung von Prozessdaten stammend von der zweiten Steuerung. Damit die Datenbusteilnehmer in diesem Fall die Prozessdaten verarbeiten können, können die unterschiedlichen Instruktionslisten vorgesehen sein. Es ist aber auch denkbar, dass eine erste Instruktionsliste für den Normalbetrieb verwendet wird, wohingegen eine zweite Instruktionsliste für den Fehlerfall verwendet wird. Welche der Instruktionslisten zu verwenden ist, wird dabei mit dem Instruktionslistenindex angezeigt.

In einer weiteren bevorzugten Ausführungsform des erfindungsgemäßen Verfahrens weist der Instruktionslistenindex einen Wert aus einem festen Wertebereich auf. Beispielsweise kann der Instruktionslistenindex aus dem Bitwertebereich zwischen 0000 bis 1111 stammen. Es ist dem Fachmann aber klar, dass auch andere Wertebereiche verwendet werden können. Durch Verwenden eines Verweises in den Datenbusteilnehmern kann der für den Instruktionslistenindex verwendete Wertebereich minimiert werden, weil es ausreicht beispielsweise die Nummer eines Verweises anzugeben. Dies hat zur Folge, dass die Datenmenge für den Instruktionslistenindex innerhalb des Datenpakets minimiert wird. Dem Fachmann ist aber bewusst, dass auch andere Wertebereiche oder andere Arten der Indizierung verwendet werden können.

Die oben genannte Aufgabe wird auch gelöst durch einen Datenbusteilnehmer eines Lokalbusses, insbesondere eines Ringbusses, wobei der Datenbusteilnehmer ein Mittel zum Empfangen von zumindest einer Instruktionsliste aufweist, wobei die Instruktionsliste einen Satz von Instruktionen zum Verarbeiten von Prozessdaten aufweist sowie ein Mittel zum Empfangen eines Instruktionslistenindexes. Dabei kann das Mittel zum Empfangen der zumindest einen Instruktionsliste das gleiche Mittel wie zum Empfangen des Instruktionslistenindexes sein oder die Mittel können verschieden sein. Des Weiteren weist der erfindungsgemäße Datenbusteilnehmer ein Mittel zum Speichern der zumindest einen Instruktionsliste auf. Der Datenbusteilnehmer weist auch ein Mittel zum Auswählen einer gespeicherten Instruktionsliste basierend auf dem empfangenen Instruktionslistenindex auf, wenn der Instruktionslistenindex der gespeicherten Instruktionsliste zugeordnet ist. Der Datenbusteilnehmer weist ein Mittel zum Ausführen des Satzes von Instruktionen der ausgewählten Instruktionsliste zur Verarbeitung der Prozessdaten auf.

In einer bevorzugten Ausführungsform der Erfindung ist das/die Mittel zum Empfangen eine Empfängerschaltung oder eine Transceiverschaltung. Vorteilhafterweise ist das Mittel zum Speichern ein Halbleiterspeicher, insbesondere ein RAM-Bereich innerhalb eines integrierten Schaltkreises. Vorteilhafterweise ist das Mittel zum Auswählen eine Rechenschaltung, die insbesondere aus Gatterelementen eines integrierten Schaltkreises gebildet ist. Vorzugsweise ist das Mittel zum Ausführen als Rechenschaltung, insbesondere als digitale Logik ausgebildet, die insbesondere zumindest ein Teil eines Halbleiterchips ist. Die Schaltungen sind zum Beispiel in einem anwendungsspezifischen integrierten Schaltkreis (*engl.* ASIC) oder in einer Feld programmierbaren (Logik-)Gatter-Anordnung (*engl.* FPGA) durch Hardware-Verschaltung implementiert. Dem Fachmann ist bewusst, dass das Mittel zum Auswählen und das Mittel zum Ausführen auch durch Software, insbesondere durch die Programmierung eines Mikrocontrollers implementiert sein können.

In einer weiteren bevorzugten Ausführungsform ist der erfindungsgemäße Datenbusteilnehmer für das Verarbeiten der Prozessdaten eingerichtet. Dabei ist der Datenbusteilnehmer angepasst Prozessdaten innerhalb eines Datenpakets basierend auf dem Satz von Instruktionen der ausgewählten Instruktionsliste zumindest zu lesen und/oder zu schreiben, wenn der empfangene ILI der gespeicherten Instruktionsliste zugeordnet ist.

Die oben genannte Aufgabe wird auch gelöst durch ein Lokalbussystem, wobei das Lokalbussystem aufweist einen Lokalbusmaster und zumindest einen bereits oben beschriebenen erfindungsgemäßen Datenbusteilnehmer eines Lokalbusses. Dabei weist der Lokalbusmaster erfindungsgemäß ein Mittel zum Erzeugen eines Datenpakets mit einem Instruktionslistenindex und Prozessdaten auf sowie ein Mittel zum Übertragen des Datenpakets an den zumindest einen Datenbusteilnehmer. Dabei kann das Mittel zum Erzeugen eine Rechenschaltung sein, die insbesondere aus Gatterelementen eines integrierten Schaltkreises gebildet sein kann. Die Rechenschaltung kann als digitale Logik ausgebildet sein, die insbesondere zumindest als ein Teil eines Halbleiterchips ausgebildet ist. Die Schaltungen können in einem ASIC oder einem FPGA implementiert sein. Das Mittel zum Übertragen kann eine digitale Übertragerschaltung oder eine Transceiverschaltung sein.

In einer weiteren bevorzugten Ausführungsform weist der Lokalbusmaster des erfindungsgemäßen Lokalbussystems weiter ein Mittel zum Erzeugen zumindest einer Instruktionsliste für einen Datenbusteilnehmer auf. Der Lokalbusmaster kann dabei basierend auf Kenntnissen über den Datenbusteilnehmer Instruktionslisten erzeugen. Die Instruktionen beinhalten Operationen die der Datenbusteilnehmer mit den Prozessdaten durchführen soll. Der Lokalbusmaster kann also das Verhalten / den Programmablauf der einzelnen Datenbusteilnehmer anhand der Instruktionslisten vorgeben. Die Instruktionslisten können unterschiedliche Instruktionen aufweisen. Dabei können die Instruktionslisten jeweils für jedes Prozessdatum in dem Datenpaket eine Instruktion aufweisen. Soll der Datenbusteilnehmer beispielsweise mit einem Prozessdatum, also beispielsweise einem Bit, keine Verarbeitung durchführen, so kann die entsprechende Instruktionsliste für dieses Prozessdatum leer sein oder eine "SKIP" Instruktion aufweisen. Die Instruktionsliste kann auch die Anzahl der Wiederholungen für eine bestimmte Instruktion aufweisen. Beispielsweise kann die Instruktionsliste eine "SKIP" Instruktion beinhalten, mit dem Hinweis diese zweimal zu wiederholen, in diesem Fall werden dann die nächsten zwei Prozessdaten nicht verarbeitet, sondern übersprungen. Dem Fachmann ist bewusst, dass eine beliebige Menge von Instruktionen möglich ist, die mehr oder weniger komplex sind. Die Operationen die durchgeführt werden können basieren beispielsweise auf einem reduzierten Instruktionssatz den der Datenbusteilnehmer ausführen kann, beispielsweise "SKIP", "MOVE", "NEGATION", "INCREMENT", "AND" und "OR" oder einer Kombination daraus. Dem Fachmann ist auch bewusst, dass die Instruktionen als Funktionalität in den Datenbusteilnehmern vorgegeben sein kann und die Instruktionslisten nur entsprechende Kodierungen aufweisen, die den Datenbusteilnehmer anweisen ganz bestimmte Instruktionen auszuführen. Das Mittel zum Erzeugen der Instruktionslisten kann ein Prozessor, ein Mikrocontroller sein oder eine Rechenschaltung, die insbesondere aus Gatterelementen eines integrierten Schaltkreises gebildet sein kann. Eine manuelle Erstellung von Instruktionslisten ist ebenfalls denkbar. Die Rechenschaltung kann als digitale Logik ausgebildet sein, die insbesondere zumindest als ein Teil eines Halbleiterchips ausgebildet ist. Die Schaltungen können in einem ASIC oder einem FPGA implementiert sein.

In einer weiteren bevorzugten Ausführungsform weist der Lokalbusmaster des erfindungsgemäßen Lokalbussystems weiter ein Mittel zum Erkennen auf, welches erkennt, dass zumindest einem Instruktionslistenindex keine Instruktionsliste zugeordnet ist. Ein derartiger Instruktionslistenindex kann auch als freier oder ungenutzter Instruktionslistenindex bezeichnet werden. Das Mittel zum Erkennen kann einen Speicher aufweisen, der Informationen bzgl. der in den Datenbusteilnehmern verwendeten Instruktionslisten aufweist. Beispielsweise kann der Speicher einen bestimmten Bereich für jeden Datenbusteilnehmer aufweisen. In diesem Bereich kann für jede auf dem Datenbusteilnehmer gespeicherte Liste ein Eintrag vorhanden sein, der nicht leer ist. Dann kann das Mittel zum Erkennen erkennen, dass nur die leeren Plätze noch mit Instruktionslisten belegt werden können. Die Einträge können dabei unterschiedlich komplex sein. Beispielsweise können die Einträge nur anzeigen, dass eine Instruktionsliste verknüpft mit einem speziellen Instruktionslistenindex vorhanden ist, oder eine komplette Kopie der Instruktionsliste kann hinterlegt sein. Die Einträge können dabei von den Datenbusteilnehmern selbst an den Lokalbusmaster gesendet werden. Der Datenbusteilnehmer selbst kann ein Mittel aufweisen, welches verhindert, dass unbeabsichtigt Instruktionslisten überschrieben werden. Dieses Mittel kann erkennen, welche indizierbaren Verweise noch keine Einträge aufweisen und nur die leeren Verweise können verwendet werden um Instruktionslisten abzulegen.

Mit Hilfe des Mittels zum Erkennen, kann der Lokalbusmaster Instruktionslistenindizes identifizieren, die noch nicht verwendet werden, also für die es auch noch keine entsprechenden Instruktionslisten oder Verweise in den Datenbusteilnehmern gibt. Diese freien Instruktionslistenindizes können verwendet werden, wenn der Lokalbusmaster neue Instruktionslisten an die Datenbusteilnehmer überträgt. Dabei kann das Mittel zum Erkennen ein Prozessor, ein Mikrocontroller, oder eine Rechenschaltung sein, wobei die Rechenschaltung insbesondere aus Gatterelementen eines integrierten Schaltkreises gebildet sein kann. Die Rechenschaltung kann als digitale Logik ausgebildet sein, die insbesondere zumindest als ein Teil eines Halbleiterchips ausgebildet ist. Die Schaltungen können in einem ASIC oder einem FPGA implementiert sein.

### 4. Kurze Beschreibung der Zeichnungen

Die Erfindung wird nachfolgend anhand von Ausführungsbeispielen mit den beigefügten Zeichnungen näher erläutert. Aus den beschriebenen Ausführungsbeispielen ergeben sich weitere Einzelheiten, Merkmale und Vorteile des Gegenstands der Erfindung. Es zeigen:
- Fig. 1: ein schematisches Blockdiagramm einer beispielhaften Automatisierungsanlage mit einer speicherprogrammierbaren Steuerung und einem beispielhaften Ringbus;
- Fig. 2: ein schematisches Blockdiagramm einer beispielhaften Ausführungsform eines Ringbusses und der Verarbeitung von Prozessdaten mit Hilfe von Instruktionslisten;
- Fig. 3: eine schematische Darstellung eines von einem Lokalbusmaster verwendeten Datenpakets mit Instruktionslistenindex und Prozessdaten;
- Fig. 4: eine schematische Darstellung eines von einem Lokalbusmaster verwendeten Datenpakets mit Instruktionslistendaten; und
- Fig. 5: eine schematische Darstellung eines erfindungsgemäßen Datenbusteilnehmers.

### 5. Beschreibung bevorzugter Ausführungsbeispiele

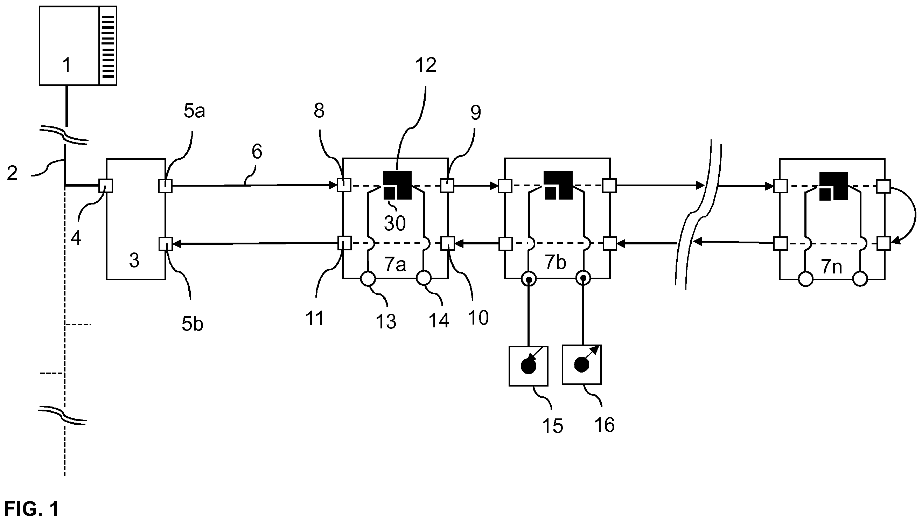

Figur 1 zeigt ein schematisches Blockdiagramm einer Automatisierungsanlage. Es wird vom Fachmann verstanden werden, dass die gezeigte Automatisierungsanlage nur beispielhaft ist und alle zu der Automatisierungsanlage gehörenden Elemente, Module, Bauteile, Teilnehmer und Einheiten verschieden ausgestaltet sein können aber dennoch die hier beschriebenen Grundfunktionalitäten erfüllen können.

Die in Figur 1 gezeigte Automatisierungsanlage weist eine übergeordnete Steuerung 1 auf, die beispielsweise mit einer speicherprogrammierbaren Steuerung, SPS, realisiert werden kann. Eine derartige SPS 1 dient grundsätzlich zur Steuerung und Regelung des von der Automatisierungsanlage ausgeführten Prozesses. Heutzutage übernehmen SPSs 1 in Automatisierungsanlagen allerdings auch weitergehende Funktionen, wie zum Beispiel die Visualisierung, Alarmierung und Aufzeichnung aller den Prozess betreffenden Daten und als solche fungiert die SPS 1 als eine Mensch-Maschinen Schnittstelle. Es gibt SPS 1 in unterschiedlichen Leistungsklassen, die unterschiedliche Ressourcen (Rechenkapazität, Speicherkapazität, Anzahl und Art von Ein- und Ausgängen, und Schnittstellen) aufweisen, die es der SPS 1 ermöglichen den Prozess der Automatisierungsanlage zu steuern und zu regeln. Eine SPS 1 hat zumeist einen modularen Aufbau und besteht aus einzelnen Komponenten, die jeweils eine andere Aufgabe erfüllen. Üblicherweise besteht eine SPS 1 aus einer zentralen Rechenbaugruppe (mit einem oder mehreren Hauptprozessoren und Speichermodulen) und mehreren Baugruppen mit Eingängen und Ausgängen. Derartige modular aufgebaute SPS 1 lassen sich durch Hinzufügen von Baugruppen leicht erweitern. Hierbei hängt es von der Komplexität des Prozesses und der Komplexität des Aufbaus der Automatisierungsanlage ab, welche Baugruppen in der SPS 1 integriert sein müssen. In heutigen Automatisierungsanlagen ist die SPS 1 auch zumeist kein unabhängiges System mehr, sondern die SPS 1 ist über entsprechende Schnittstellen - hier nicht dargestellt - mit dem Internet oder Intranet verbunden. Dies bedeutet, die SPS 1 ist Teil eines Netzwerkes über welches oder von welchem die SPS 1 Information, Instruktionen, Programmierungen etc. erhalten kann. Zum Beispiel kann die SPS 1 über eine Verbindung zu einem sich im Intranet oder Internet befindlichen Computer Informationen über dem Prozess zugeführte Materialien bekommen, so dass beispielsweise durch die Kenntnis deren Anzahl oder Beschaffenheit der Prozess optimal gesteuert werden kann. Es ist auch denkbar, dass die SPS 1 durch einen Zugriff aus dem Intranet oder Internet von einem Anwender gesteuert wird. So kann beispielsweise ein Anwender mit Hilfe eines Computers, auch Leitrechner genannt, auf die SPS 1 zugreifen und deren Anwenderprogrammierung überprüfen, ändern, oder korrigieren. Dementsprechend ist der Zugriff auf die SPS 1 von einer oder mehreren Fernwarten oder Leitstellen möglich. Die Leitrechner können gegebenenfalls Visualisierungseinrichtungen zur Darstellung von Prozessabläufen haben.

Zur Steuerung des Prozesses der Automatisierungsanlage ist die SPS 1 mit Automatisierungsgeräten verbunden. Um den Verdrahtungsaufwand gering zu halten werden für diese Verbindungen Bussysteme verwendet. In dem in Figur 1 gezeigten Ausführungsbeispiel ist die SPS 1 mittels eines übergeordneten Busses 2, der in dem hier gezeigten Ausführungsbeispiel ein Feldbus sein kann, mit einem Lokalbusmaster 3 eines untergeordneten Lokalbussystems verbunden. An den übergeordneten Bus 2 können aber nicht nur wie in dem hier gezeigten Ausführungsbeispiel ein Lokalbusmaster 3 eines Lokalbusses angeschlossen werden, sondern auch andere beliebige Teilnehmer - hier nicht gezeigt -, die zur Kommunikation mit der SPS 1 ausgestaltet sind.

Der übergeordnete Bus 2 ist in dem hier gezeigten Ausführungsbeispiel mit dem Lokalbusmaster 3 verbunden. Hierzu weist der Lokalbusmaster 3 eine erste Schnittstelle 4 auf, die derart ausgelegt ist, dass diese mit dem übergeordneten Bus 2 verbunden werden kann. Die Schnittstelle 4 kann hierzu beispielsweise eine Aufnahme in Form einer Buchse aufweisen und der übergeordnete Bus 2 kann einen Stecker aufweisen, der von der Buchse aufgenommen werden kann. Dabei können der Stecker und die Buchse zum Beispiel ein Modularstecker und eine Modularbuchse sein, d.h. jede Ader des übergeordneten Busses 2 wird mit einer Verbindung in der Modularbuchse elektrisch oder optisch verbunden. Dem Fachmann sind aber auch andere Möglichkeiten bekannt, wie eine Schnittstelle 4 auszulegen ist, so dass der Lokalbusmaster 3 elektrisch oder optisch mit dem übergeordneten Bus 2 verbunden werden kann. Dem Fachmann sind dabei, Schraub-, Dreh-, Klick- oder Steckverbindungen bekannt, mit deren Hilfe sich eine elektrische oder optische Verbindung herstellen lassen kann. Dabei wird zumeist ein männlicher Stecker von einem weiblichen Gegenstück aufgenommen. Diese Aufnahme stellt zumeist nicht nur die elektrische oder optische Verbindung her, sondern sorgt auch dafür, dass die beiden Teile mechanisch gekoppelt werden und nur mit Aufwendung einer bestimmten Kraft wieder voneinander gelöst werden können. Es ist aber auch denkbar, dass der übergeordnete Bus 2 fest mit der Schnittstelle 4 verdrahtet ist.

Der Lokalbusmaster 3 in dem hier gezeigten Ausführungsbeispiel weist eine weitere zweite Schnittstelle auf, um den Lokalbusmaster 3 mit dem Lokalbus zu verbinden. An den Lokalbus sind Datenbusteilnehmer 7a, 7b, ..., 7n angeschlossen bzw. bilden diesen. Der Lokalbus ist vorteilhafterweise derart ausgebildet, dass ein vom Lokalbusmaster 3 gesendetes Datenpaket durch alle mit dem Lokalbus verbundenen Datenbusteilnehmer 7a, 7b, ..., 7n und an den Lokalbusmaster 3 zurück übertragen wird. Dabei empfängt ein Datenbusteilnehmer 7a, 7b, ..., 7n von seinem vorgelagerten Datenbusteilnehmer 7a, 7b, ..., 7n immer nur einen Teil des Datenpakets. Nach einer Zeitspanne in der die in diesem Teil enthaltenen Daten vom Datenbusteilnehmer 7a, 7b, ..., 7n verarbeitet werden können, wird der Teil an den nachgelagerten Datenbusteilnehmer 7a, 7b, ..., 7n weitergeleitet und gleichzeitig wird von dem vorgelagerten Datenbusteilnehmer 7a, 7b, ..., 7n ein neuer Teil des Datenpakets empfangen. Auf diese Weise passieren alle Teile des Datenpakets sequentiell alle Datenbusteilnehmer 7a, 7b, ..., 7n. Der Lokalbus ist vorteilhafterweise in einer ringförmigen Struktur ausgebildet. Derartige Lokalbusse können auch als Ringbus 6 bezeichnet werden. Der Lokalbus kann alternativ auch strangförmig oder sternförmig oder aus einer Kombination oder Mischform der zuvor genannten ausgebildet sein. Das Senden und Empfangen der Datenpakete wird dabei über die zweite Schnittstelle des Lokalbusmasters 3 bewerkstelligt. In dem hier gezeigten Ausführungsbeispiel teilt sich die zweite Schnittstelle in einen ersten Teil 5a und einen zweiten Teil 5b auf. Der erste Teil 5a der zweiten Schnittstelle stellt die Abwärtsverbindung im Ringbus 6 her und der zweite Teil 5b der zweiten Schnittstelle stellt die Aufwärtsverbindung im Ringbus 6 her.

Der Ringbus 6, dessen Datensenderichtung mit Pfeilen in dem in Figur 1 gezeigten Ausführungsbespiel gezeigt ist, weist in dem hier gezeigten Ausführungsbeispiel mehrere Datenbusteilnehmer 7a, 7b, ..., 7n auf. Diese Datenbusteilnehmer 7a, 7b, ..., 7n weisen in dem hier gezeigten Ausführungsbeispiel jeweils eine Schnittstelle 8 auf, um Daten von einem vorgelagerten oder vorangehenden Datenbusteilnehmer 7a, 7b, ..., 7n zu empfangen. Im Fall von Datenbusteilnehmer 7a, empfängt dieser über die Schnittstelle 8 Daten von dem vorgelagerten Lokalbusmaster 3. Des Weiteren weisen die Datenbusteilnehmer 7a, 7b, ..., 7n in dem hier gezeigten Ausführungsbeispiel jeweils eine Schnittstelle 9 auf, um Daten an einen nachgelagerten oder nachfolgenden Datenbusteilnehmer 7a, 7b, ..., 7n weiterzuleiten. In Fall von Datenbusteilnehmer 7a sendet dieser Daten an den nachgelagerten Datenbusteilnehmer 7b über die Schnittstelle 9. Die Schnittstellen 8 und 9 dienen dabei zum Propagieren von Daten in Abwärtsrichtung des Ringbusses 6, d.h. von dem Lokalbusmaster 3 weg. Des Weiteren weisen die Datenbusteilnehmer 7a, 7b, ..., 7n in diesem Ausführungsbeispiel auch Schnittstellen 10 und 11 auf, zum Propagieren von Daten in Aufwärtsrichtung des Ringbusses 6, d.h. zum Lokalbusmaster 3 hin. Im Fall des Datenbusteilnehmers 7a ist Schnittstelle 10 dabei dazu ausgelegt, Daten von dem nachgelagerten oder nachfolgenden Datenbusteilnehmer 7b zu empfangen und Schnittstelle 11 ist dazu ausgelegt, Daten an den vorgelagerten oder vorangehenden Datenbusteilnehmer, hier den Lokalbusmaster 3, weiterzuleiten. Es kann also auch gesagt werden, dass die Schnittstellen 9 und 11 Senderschnittstellen sind, wohingegen die Schnittstellen 8 und 10 Empfängerschnittstellen sind.

In dem hier gezeigten Ausführungsbeispiel werden die Verbindungen der Schnittstellen und der SPS 1 beziehungsweise den Datenbusteilnehmern 7a, 7b, ..., 7n mit Hilfe von Kabeln oder Leiterplatten und/oder zur direkten oder indirekten Kontaktierung mittels elektrischen Kontakten realisiert. Eine andere Alternative ist, dass die einzelnen Verbindungen kabellos hergestellt werden, und die Schnittstellen die notwendigen Umsetzungen auf die verwendeten Funkstandards bereitstellen.

Auch wenn der Lokalbusmaster 3 und die einzelnen Datenbusteilnehmer 7a, 7b, ..., 7n in dem hier gezeigten Ausführungsbeispiel voneinander beabstandet gezeigt sind, der Lokalbusmaster 3 also dezentral angeordnet ist von den Datenbusteilnehmern 7a, 7b, ..., 7n, ist dem Fachmann bewusst, dass die Datenbusteilnehmer 7a, 7b, ..., 7n und der Lokalbusmaster 3 - der auch einen Datenbusteilnehmer des Ringbusses 6 darstellt - auch direkt miteinander verbunden werden können. Dabei können beispielsweise Kontakte des einen Datenbusteilnehmers in entsprechende Aufnahmen oder Aufnahmekontakte eines direkt benachbarten Datenbusteilnehmers greifen, um so eine elektrische Verbindung zwischen den Datenbusteilnehmern herzustellen, damit Daten in Abwärts- und Aufwärtsrichtung gesendet werden können. Beispielsweise können die Datenbusteilnehmer 7a, 7b, ...,7n an der dem Master abgewandten Seite Aufnahmen und an der dem Master zugewandten Seite Kontakte aufweisen. Werden die Datenbusteilnehmer 7a, 7b, ...,7n dann entsprechend aneinandergereiht, so greifen die Kontakte des einen Datenbusteilnehmers 7a, 7b, ..., 7n jeweils in die Aufnahmen des anderen Datenbusteilnehmers 7a, 7b, ..., 7n ein und es kann eine elektrische Verbindung erzeugt werden. Der Lokalbusmaster 3 weist dann entsprechend Kontakte an der Seite auf, die in die Aufnahmen des ersten Datenbusteilnehmers 7a greifen, um so zwischen den Schnittstellen 5a und 8 beziehungsweise den Schnittstellen 5b und 11 eine elektrische Verbindung zu erzeugen. Dem Fachmann sind aber auch noch andere Möglichkeiten, z.B. Druckkontakte, Messer- und Gabelkontakte bekannt, wie zwei direkt aneinander angeordnete Datenbusteilnehmer 7a, 7b, ..., 7n eine elektrische oder auch optische Verbindung mittels entsprechender Komponenten herstellen können.

Im Falle dessen, dass die Datenbusteilnehmer 7a, 7b, ..., 7n und der Lokalbusmaster 3 direkt miteinander verbunden werden sollen, können diese auch mechanische Aufnahmen oder mechanische Befestigungsmittel aufweisen, mit denen die einzelnen Datenbusteilnehmer 7a, 7b, ..., 7n und der Lokalbusmaster 3 miteinander verbunden werden können. Hierbei kann zum Beispiel ein Datenbusteilnehmer 7a, 7b, ..., 7n an einer Seite einen Vorsprung aufweisen und an der anderen Seite eine Hinterschneidung aufweisen. Werden die Datenbusteilnehmer 7a, 7b, ..., 7n dann aneinandergereiht, so greift ein Vorsprung in eine Hinterschneidung des anderen Datenbusteilnehmers 7a, 7b, ..., 7n ein, so dass eine mechanische Kopplung entsteht. Zur einfachen Aneinanderreihung der Datenbusteilnehmer 7a, 7b, ..., 7n können diese auch auf einer gemeinsamen Aufnahme, zum Beispiel einer Hutschiene angeordnet werden. Zur Befestigung auf der Hutschiene können die Datenbusteilnehmer 7a, 7b, ..., 7n entsprechende Befestigungsmittel aufweisen. Alternativ oder zusätzlich können die Datenbusteilnehmer 7a, 7b, ..., 7n auch beispielsweise lösbar verbindbare Befestigungsmittel aufweisen, mit denen die Datenbusteilnehmer 7a, 7b, ..., 7n entweder an der Hutschiene oder an einer anderen Aufnahme befestigt werden können. Dazu kann das lösbar verbindbare Befestigungsmittel austauschbar sein und ein entsprechendes Befestigungsmittel für die gewünschte Aufnahme kann mit den Datenbusteilnehmern 7a, 7b, ..., 7n verbunden werden, so dass diese an der gewünschten Aufnahme befestigt werden können.

Des Weiteren weisen die Datenbusteilnehmer 7a, 7b, ..., 7n in dem in Figur 1 gezeigten Ausführungsbeispiel auch eine Verarbeitungseinheit 12 auf. Diese Verarbeitungseinheit 12 kann eine arithmetische-logische Einheit sein oder eine andere Art von Rechenwerk sein mit dessen Hilfe Daten verarbeitet werden können. Die Verarbeitungseinheit 12 ist vorzugsweise ein integraler Bestandteil des Datenbusteilnehmers 7a, 7b, ..., 7n, um eine besonders schnelle und zeitlich synchronisierte Bearbeitung der Daten sicherzustellen. Die Verarbeitungseinheit 12 kann auch einen Mikocontroller umfassen.

Die Verarbeitungseinheit 12 kann auch als Gesamtschaltung des Datenbusteilnehmers bezeichnet werden. D.h. die Verarbeitungseinrichtung 12 empfängt Daten über die Eingänge 8 und 10 und gibt Daten auf den Ausgängen 9 und 11 aus. Des Weiteren kann die Verarbeitungseinrichtung 12 Daten von den Ein-/und Ausgängen 13 und 14 empfangen beziehungsweise ausgeben. Weiterhin hat die Verarbeitungseinheit 12 Zugriff auf einen Speicher 30 des Datenbusteilnehmers 7a, 7b, ..., 7n in dem beispielsweise gespeicherte Daten, Prozessdaten, oder Instruktionslisten gespeichert sind.

Die Verarbeitungseinheit 12 kann dazu ausgelegt sein, empfangene Daten zu verarbeiten und Daten auszugeben. Empfangen werden können zu verarbeitende Daten entweder von einem vorgelagerten Datenbusteilnehmer oder von Eingängen 13 des Datenbusteilnehmers 7a, 7b, ..., 7n. Dabei können die Eingänge 13 des Datenbusteilnehmers 7a, 7b, ..., 7n mit Sensoren 15 verbunden sein, die zum Beispiel Messdaten, Zustandsdaten, etc. senden. Ausgegeben werden können verarbeitete Daten entweder an einen nachgelagerten Datenbusteilnehmer oder an Ausgängen 14 des Datenbusteilnehmers 7a, 7b, ..., 7n. Dabei können die Ausgänge 14 des Datenbusteilnehmers 7a, 7b, ..., 7n mit Aktoren 16 verbunden sein, die zum Beispiel mit Hilfe der an sie gerichteten Daten eine bestimmte Aktion durchführen. Wenn in Aufwärtsrichtung auch eine Verarbeitung der Daten stattfinden soll, so können Daten auch von einem nachgelagerten Datenbusteilnehmer 7a, 7b, ..., 7n empfangen werden und verarbeitete Daten an einen vorgelagerten Datenbusteilnehmer 7a, 7b, ..., 7n gesendet werden.

Einfachheitshalber sind in dem hier gezeigten Ausführungsbeispiel die Datenbusteilnehmer 7a, 7b, ..., 7n nur mit einem Eingang 13 und einem Ausgang 14 gezeigt und auch nur Datenbusteilnehmer 7b ist mit Sensor 15 und Aktor 16 verbunden. Es ist dem Fachmann aber bewusst, dass die Datenbusteilnehmer 7a, 7b, ..., 7n eine Vielzahl von Ein- und Ausgängen 13 und 14 aufweisen können, und mit einer Vielzahl von unterschiedlichen Sensoren 15 und Aktoren 16 verbunden werden können. Dabei ist das die Sensoren 15 charakterisierende Merkmal, dass die Sensoren 15 Daten oder Signale aufnehmen und an den Datenbusteilnehmer 7a, 7b, ..., 7n senden, wohingegen Aktoren 16 Daten oder Signale von den Datenbusteilnehmern 7a, 7b, ..., 7n empfangen und basierend auf diesen Daten oder Signalen eine Aktion ausführen.

Alternativ können die Schnittstellen 8, 9, 10 und 11 in einer Moduleinheit integriert sind und die Datenbusteilnehmer 7a, 7b, 7n auf diese Moduleinheit aufgesteckt werden können. Die Moduleinheiten können auch als Basiselemente des Ringbusses 6 bezeichnet werden. Die Ringbus 6 Infrastruktur wird dabei durch die Moduleinheiten aufgebaut und die Datenbusteilnehmer 7a, 7b, ..., 7n sind auswechselbar, so dass der Ringbus 6 mit beliebigen Datenbusteilnehmern 7a, 7b, ..., 7n aufgebaut werden kann. Mit Hilfe der Moduleinheiten ist auch sichergestellt, dass auch wenn ein Datenbusteilnehmer 7a, 7b, ..., 7n entfernt wird, nicht die Kommunikation zwischen den restlichen Datenbusteilnehmern 7a, 7b, ..., 7n unterbrochen wird, weil die Kommunikation über die noch vorhandenen Moduleinheiten geschieht.

Die in diesem Ausführungsbeispiel gezeigten Datenbusteilnehmer 7a, 7b, ..., 7n werden auf Grund ihrer Ein- und Ausgänge 13, 14, die mit Sensoren 15 beziehungsweise Aktoren 16 verbunden werden können, auch häufig als E/A-Module bezeichnet. Auch wenn die Datenbusteilnehmer 7a, 7b, ..., 7n in dem hier gezeigten Ausführungsbeispiel als räumlich getrennt von den Sensoren 15 beziehungsweise Aktoren 16 dargestellt sind, so können die Sensoren 15 beziehungsweise Aktoren 16 auch in dem E/A-Modul integriert sein.

Der in dem hier gezeigten Ausführungsbeispiel gezeigte Ringbus 6 basiert auf einer Zyklusrahmenkommunikation. Dabei werden von dem Lokalbusmaster 3 Zyklusrahmen generiert, die Datenpakete tragen, die einen Kopfteil, einen Prozessdatenteil oder Informationsdatenteil und einen Prüfsummenteil aufweisen.

Jedes Datenpaket wird von dem Lokalbusmaster 3 in Abwärtsrichtung an den ersten Datenbusteilnehmer 7a des Ringbusses 6 gesendet. Dieser empfängt einen ersten Teil des Datenpakets über die Schnittstelle 8. Ein derartiger Teil des Datenpakets wird im Folgenden auch als Stück oder Einheit bezeichnet. Der Datenbusteilnehmer 7a führt dann eine Verarbeitung des Teils aus, und leitet den Teil dann an den nächsten Datenbusteilnehmer 7b über Schnittstelle 9 weiter, vorzugsweise gleichzeitig empfängt der erste Datenbusteilnehmer 7a einen zweiten Teil des Datenpakets usw. Die Größe der Teile des Datenpakets, also die Stückelung des Datenpakets, hängt dabei von der Aufnahmekapazität der Datenbusteilnehmer 7a, 7b, ..., 7n ab, beispielsweise können zur Verarbeitung gleichzeitig eine feste Anzahl von Bits, beispielsweise 8 Bits des Datenpakets am Datenbusteilnehmer 7a, 7b, ..., 7n vorliegen.

Das Datenpaket durchläuft dementsprechend einheitenweise, stückchenweise, oder Teile weise, zum Beispiel in Teilen oder Symbolen von 8 Bits, die Datenbusteilnehmer 7a, 7b, ..., 7n. Der Teil des Datenpakets, welcher vom letzten Datenbusteilnehmer, in dem hier gezeigten Ausführungsbeispiel Datenbusteilnehmer 7n, verarbeitet worden ist, durchläuft dann in Aufwärtsrichtung den Ringbus 6, so dass die Teile ausgehend von dem letzten Datenbusteilnehmer 7n wieder in Richtung Lokalbusmaster 3 durch alle Datenbusteilnehmer 7a, 7b, ..., 7n aufwärts gesendet werden. Hierzu weist der letzte Datenbusteilnehmer 7n entweder eine schaltbare Brücke auf, die die Schnittstelle 9 mit der Schnittstelle 10 verbindet oder an den letzten Datenbusteilnehmer 7n wird eine schaltbare Brücke - hier nicht gezeigt - angeschlossen, die die Funktion übernimmt die Teile des Datenpakets von der Schnittstelle 9 auf die Schnittstelle 10 zu leiten. Alternativ kann die Schnittstelle 10 des Datenbusteilnehmers 7n auch mit Hilfe einer Bypassleitung - hier nicht gezeigt - direkt mit der Schnittstelle 5b des Lokalbusmasters 3 verbunden werden.

In der Aufwärtsrichtung können die Einheiten des Datenpakets beziehungsweise der Datenpakete, wie in dem hier gezeigten Ausführungsbeispiel durch die einzelnen Datenbusteilnehmer 7a, 7b, ..., 7n zurück an den Lokalbusmaster 3 geschleift werden, ohne dass eine weitere Verarbeitung stattfindet. Es ist aber auch denkbar, dass in der Aufwärtsrichtung erneut eine Verarbeitung der Einheiten des Datenpakets stattfindet, so dass das Datenpaket zweimal verarbeitet werden kann, einmal auf der Abwärtsrichtung zum letzten Datenbusteilnehmer 7n und einmal in Aufwärtsrichtung zum Lokalbusmaster 3. Beispielsweise kann in Aufwärtsrichtung eine Verarbeitung durch Signalauffrischung und/oder Phasenschiebung erfolgen.

Bei der Verarbeitung der Prozessdaten in Abwärtsrichtung, d.h. von dem Lokalbusmaster 3 weg, oder in Aufwärtsrichtung, d.h. zum Lokalbusmaster 3 hin, wird die Verarbeitung mit Hilfe von Instruktionslisten durchgeführt, wobei die Instruktionslisten Sätze von Instruktionen beinhalten, die von der Verarbeitungseinheit 12 der Datenbusteilnehmer 7a, 7b, ..., 7n ausgeführt werden können. Die Instruktionslisten selbst können den einzelnen Datenbusteilnehmern 7a, 7b, ..., 7n in einer Initialisierungsphase vom Lokalbusmaster 3 zugesandt werden. Die Instruktionsliste kann den Datenbusteilnehmern 7a, 7b, ..., 7n aber auch in einem Kommunikationsdatenpaket direkt vor dem Prozessdatenpaket von dem Lokalbusmaster 3 zugesendet werden.

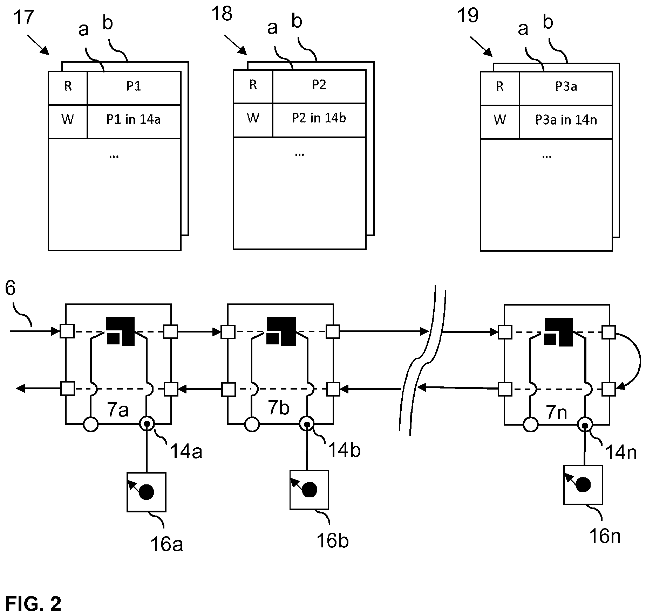

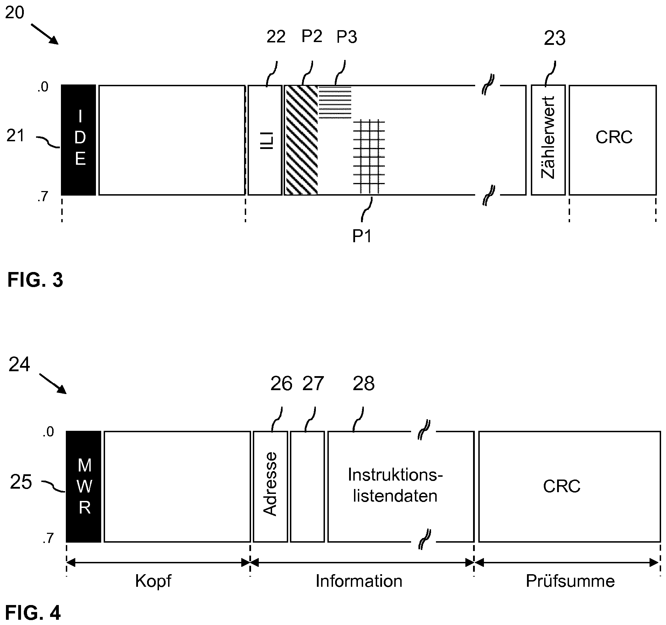

In den Datenbusteilnehmern 7a, 7b, ..., 7n sind die Instruktionslisten dabei beispielsweise indiziert gespeichert. Dabei kann sich der Index entweder auf die Nummern der Instruktionsliste selbst beziehen, oder auf einen Speicherbereich in dem die Instruktionsliste gespeichert ist, oder der Datenbusteilnehmer 7a, 7b, ..., 7n kann Verweise aufweisen, die auf die Instruktionslisten hinweisen. Ein Beispiel des in Figur 1 gezeigten Ringbusses 6 mit Datenbusteilnehmers 7a, 7b, ..., 7n mit gespeicherten Instruktionslisten ist in Figur 2 gezeigt. Ein Beispiel einer Indizierung mit Hilfe von Verweisen ist in Figur 4 gezeigt.

Figur 2 zeigt ein schematisches Blockdiagramm einer beispielhaften Ausführungsform eines Ringbusses 6 und der Verarbeitung von Prozessdaten P1, P2, P3a aus einem Prozessdatenpaket, mit Hilfe von unterschiedlichen Instruktionslisten 17, 18, 19. Dabei zeigt Figur 2 einen Teil des in Figur 1 gezeigten Ringbusses 6 mit den Datenbusteilnehmern 7a, 7b, ..., 7n. Jeder Ausgang 14a, 14b, ..., 14n eines Datenbusteilnehmer 7a, 7b, ..., 7n ist in dem hier gezeigten Ausführungsbeispiel mit einem Aktor 16a, 16b,..., 16n verbunden. Die jeweiligen Datenbusteilnehmer 7a, 7b, ..., 7n weisen jeweils zwei a/b Instruktionslisten 17, 18, 19 auf. Diese Instruktionslisten 17, 18 und 19 sind in Speichern 25 der Datenbusteilnehmer 7a, 7b, ..., 7n gespeichert. Originär können die Instruktionslisten 17, 18 und 19 während einer Initialisierungsphase an den Datenbusteilnehmern 7a, 7b, ..., 7n von dem Lokalbusmaster 3 empfangen worden sein und gespeichert worden sein. Die Instruktionslisten 17, 18 und 19 sind in dem hier gezeigten Ausführungsbeispiel als Tabellen dargestellt. Es ist dem Fachmann aber bewusst, dass auch andere Formen der Instruktionslisten 17, 18 und 19 verwendet werden können. In dem hier gezeigten Ausführungsbeispiel enthalten die Instruktionslisten 17, 18 und 19 jeweils in der ersten Spalte die entsprechende von dem Datenbusteilnehmern 7a, 7b, ..., 7n auszuführende Instruktion. Dabei symbolisiert ein "R" (*engl.* Read) dass etwas gelesen werden soll, ein "W" (engl. Write) dass etwas geschrieben werden soll. Es können aber auch noch andere Operationen ausgeführt werden, wie zum Beispiel "AND", "OR", "NOT", "NOR", "XOR", "NAND", "SHIFT", "SKIP", "INCREMENT" etc. In der zweiten Spalte stehen die Operanden mit denen die durch die Instruktion definierte Operation auszuführen ist. Dem Fachmann ist bewusst, dass die Operationen die von den Datenbusteilnehmern 7a, 7b, ..., 7n ausgeführt werden sollen softwaretechnisch in der Instruktionsliste hinterlegt sein können, beispielsweise in Form von Funktionen, oder die Operationen können durch am Datenbusteilnehmern 7a, 7b, ..., 7n vorhandene Gatterschaltungen hardwaretechnisch realisiert werden, so dass die Instruktionsliste nur die für die Operation zu durchlaufenden Gatter angibt. Es ist dem Fachmann bewusst, dass je nach Speichereinsatz bei den Datenbusteilnehmern 7a, 7b, ..., 7n, die Instruktionslisten mehr oder weniger komplex ausgestaltet sein können, von Programmcode in einer höheren Programmiersprache bis hinunter zur Maschinensprache, d.h. Instruktionen, die von der Verarbeitungseinheit 12 der Datenbusteilnehmer 7a, 7b, ..., 7n direkt ausgeführt werden können. Dabei besteht der Maschinencode aus einer Folge von Bytes, die sowohl Befehle als auch Daten repräsentieren können. Der Lokalbusmaster 3 kann beim Erzeugen der Instruktionslisten diese gleich in Maschinencode an die entsprechenden Datenbusteilnehmern 7a, 7b, ..., 7n senden, oder diesen die Instruktionslisten in Form von Programmcode zusenden, der von den Datenbusteilnehmern 7a, 7b, ..., 7n einzeln kompiliert wird und in Maschinensprache umgesetzt wird. Sendet der Lokalbusmaster 3 den Datenbusteilnehmern 7a, 7b, ..., 7n die Instruktionslisten gleich in Form von Maschinensprache, so hat dies den Vorteil, dass die Datenbusteilnehmer 7a, 7b, ..., 7n keine aufwendige Verarbeitungseinheit 12 bedürfen, weil diese nicht in der Lage sein muss die erhaltenen Instruktionslisten zu kompilieren. Werden allerdings komplexere Datenbusteilnehmer 7a, 7b, ..., 7n eingesetzt, kann eine Kompilierung auf dem Datenbusteilnehmer 7a, 7b, ..., 7n selbst von Vorteil sein, weil in diesem Fall der Lokalbusmaster 3 keine Kenntnisse über die Hardware des Datenbusteilnehmer 7a, 7b, ..., 7n haben muss. Es ist dem Fachmann aber bewusst, dass die Komplexität der Instruktionslisten der Komplexität der Datenbusteilnehmer 7a, 7b, ..., 7n anpassbar ist.

In dem hier gezeigten Beispiel wird der Einfachheit halber darauf verzichtet Maschinencode oder Programmcode anzugeben, sondern es werden lesbare Beispiele aufgeführt. Dem Fachmann ist aber bewusst, dass diese Beispiele in der Implementierung in Form von Programmcode oder Maschinencode umgesetzt werden kann. Des Weiteren ist dem Fachmann bewusst, dass die hier angegebenen Beispiele nur dem Zwecke der Erläuterung dienen, ohne einschränkend verstanden zu werden.

In dem hier gezeigten Beispiel heißt die erste Instruktion in der ersten Instruktionsliste 17a für den Datenbusteilnehmer 7a "R" also Lese. Was gelesen werden soll steht in der zweiten Spalte, nämlich die Prozessdaten P1. Dabei können die Prozessdaten P1 beispielsweise als ein Bit oder Bitbereich, zum Beispiel maximal 8 Bit entsprechend einer Einheit des Datenpakets, des durch den Ringbus geschleiften Zyklusrahmens angegeben werden. Die zweite Instruktion in der ersten Instruktionsliste 17a heißt "W" also Schreibe. Was und wohin geschrieben werden soll ist in der zweiten Spalte definiert, nämlich die gelesenen Prozessdaten P1 an den Ausgang 14a des Datenbusteilnehmers 7a. Das Schreiben der Prozessdaten 7a an den Ausgang 14a bedeutet dabei beispielsweise, dass dem Aktor 16a ein Soll- oder Stellwert vorgegeben wird anhand der Aktor 16a eine Aktion ausführt. Vorzugsweise werden die Werte der Prozessdaten für die Eingänge beziehungsweise Ausgänge in einem Speicher 30 zwischengespeichert. Die Instruktionslisten 18a und 19a der Datenbusteilnehmer 7b und 7n weisen Instruktionen auf, nur dass hier Prozessdaten P2 und P3 gelesen werden und an die entsprechenden Ausgänge 14b und 14n der Datenbusteilnehmer 7b und 7n geschrieben werden. Auch wenn hier nicht gezeigt, ist dem Fachmann bewusst, dass auch von den Eingängen 13a, 13b, 13n der jeweiligen Datenbusteilnehmer 7a, 7b, ..., 7n gelesen werden kann, also beispielsweise ein Messwert von einem mit den Eingängen 13a, 13b, 13n verbundenen Sensor 15 gelesen werden kann und der entsprechende Messwert als Prozessdatum in einen am Datenbusteilnehmer 7a, 7b, ..., 7n vorliegenden Teil des Prozessdatenpakets geschrieben werden kann.

Jeder der in diesem Ausführungsbeispiel gezeigten Datenbusteilnehmer 7a, 7b, ..., 7n weist zwei Instruktionslisten 17a und 17b, 18a und 18b, 19a und 19b auf. Diese Instruktionslisten 17, 18, 19 können für unterschiedliche Betriebsmodi der Datenbusteilnehmer 7a, 7b, ..., 7n bestimmt sein. Beispielsweise werden die Instruktionslisten 17a, 18a und 19a im Normalbetrieb verwendet, wohingegen die Instruktionslisten 17b, 18b und 19b im Fehlerfall verwendet werden. Es ist aber auch denkbar, dass während des Normalbetriebs unterschiedliche Instruktionslisten 17, 18, 19 verwendet werden, um ein unterschiedliches Verhalten des Ringbusses 6 zu erzeugen. z.B. zwei Konfigurationen für zwei Werkzeuge eines Roboters etc. Mit Hilfe des Instruktionslistenindexes kann den Datenbusteilnehmern 7a, 7b, ..., 7n mitgeteilt werden, welche der Instruktionslisten a oder b verwendet werden soll.

Es ist dem Fachmann bewusst, dass die in diesem Ausführungsbeispiel gezeigten Instruktionslisten 17, 18 und 19 sowie die genannten Instruktionen nur beispielhaft zu verstehen sind und dass die Instruktionslisten 17, 18, 19 beliebige Instruktionen umfassen können und beliebig im Speicher 30 der Datenbusteilnehmer 7a, 7b, ..., 7n hinterlegt sein können oder in einem Speicher hinterlegt sein können auf den die Datenbusteilnehmer 7a, 7b, ..., 7n zumindest Zugriff haben. Die möglichen Instruktionen beziehungsweise Sätze von Instruktionen richten sich dabei einzig und allein danach, wie viele Takte die einzelnen Datenbusteilnehmer 7a, 7b, ..., 7n zur Verarbeitung Zeit haben. Wenn die Datenbusteilnehmer 7a, 7b, ..., 7n beispielsweise auf zwei Arbeitstakte beschränkt sind, so ist dem Fachmann bewusst, dass auch der Satz an möglichen zu verarbeitenden Instruktionen beschränkt ist. Bevorzugt wird daher ausschließlich eine feste Menge von Befehlen verwendet.

Die Erzeugung der Instruktionslisten 17, 18, 19 und deren Bereitstellung an die Datenbusteilnehmer 7a, 7b, ..., 7n wird dabei vorzugsweise vom Lokalbusmaster 3 ausgeführt. Dieser kann den einzelnen Datenbusteilnehmern 7a, 7b, ..., 7n jeweils die erzeugten Instruktionslisten 17, 18, 19 in einer Initialisierungsphase zusenden. Anschließend kann der Lokalbusmaster 3 den Prozessdaten P1, P2, P3 einen Instruktionslistenindex voranstellen und den Datenbusteilnehmern 7a, 7b, ..., 7n anhand des Instruktionslistenindexes mitteilen, welche Instruktionsliste 17a/b, 18a/b, 19a/b für die Prozessdaten P1, P2, P3 verwendet werden soll. Der Lokalbusmaster 3 kann also den Datenbusteilnehmern 7a, 7b, ..., 7n in Abhängigkeit des gewünschten Betriebsmodus mitteilen, welche Instruktionsliste 17a/b, 18a/b, 19a/b verwendet werden soll. Erkennt der Lokalbusmaster 3 einen Fehlerfall, kann der Lokalbusmaster 3 einen dem Fehlerfall oder einem speziellen Fehlerbild zugeordneten Instruktionslistenindex senden, um den Ringbus 6 in einen speziellen Fehlermodus zu versetzen. Beispielsweise enthalten derartige Fehlerfallinstruktionslisten nur Instruktionen, die die Aktoren stoppen oder in eine Fehlerfallposition bewegen etc. Das Ändern des Instruktionslistenindex ist dabei vorzugsweise nur dem Lokalbusmaster 3 erlaubt. Der Lokalbusmaster 3 kann mittels der zu dem Instruktionslistenindex zugehörigen Instruktionslisten eine Sicherheitsfunktion steuern.

Figur 3 zeigt eine schematische Darstellung eines Beispiels eines von einem Lokalbusmaster 3 erzeugten Datenpakets 20 mit Prozessdaten P1, P2, P3 und einem Instruktionslistenindex, ILI, im Feld 22. Das gezeigte Datenpaket 20 weist dabei mindestens einen allgemeinen Kopfteil, einen Informationsteil sowie einen Prüfsummenteil auf. Das gezeigte Datenpaket 20 kann auch als Prozessdatenpaket bezeichnet werden.

Der Kopfteil beinhaltet ein Feld 21, welches ein eindeutiges nur einmal auftretendes Bitmuster IDE enthält, welches auch als Kennung oder Codewort bezeichnet werden kann. Das Codewort definiert den Anfang eines Pakets. Durch die Codierung ist sichergestellt, dass das Codewort nicht noch einmal innerhalb des Datenpakets 20 zufällig auftreten kann. Die Anzahl und die Ausgestaltung von eindeutigen Bitmustern beziehungsweise Codewörtern hängen ab von der auf dem Ringbus 6 verwendeten Kodierung. Alternativ oder zusätzlich können aber auch spezielle Bitmuster oder Codewörter in dem verwendeten Busprotokoll definiert werden. Es ist dabei nur von Bedeutung, dass die Datenbusteilnehmer 7a, 7b, ..., 7n eineindeutig aus dem Bitmuster beziehungsweise Codewort des Feldes 21 erkennen können, dass in dem Datenpaket 20 Prozessdaten P1, P2, P3, ... enthalten sind. In dem hier gezeigten Ausführungsbeispiel haben die Datenbusteilnehmer 7a, 7b, ..., 7n Kenntnis darüber, dass wenn ein Feld 21 mit einem Bitmuster IDE empfangen wird, die folgenden Daten im Datenpaket 20 Prozessdaten P1, P2, P3, enthalten.

Der Kopfteil kann auch noch weitere Informationen beinhalten, die beispielsweise anzeigen, ob das Datenpaket 20 sich in Abwärtsrichtung oder Aufwärtsrichtung bewegt. Hierzu kann beispielsweise der letzte Datenbusteilnehmer 7n in den Kopfteil eine Information schreiben, dass das Datenpaket 20 bereits diesen Datenbusteilnehmer 7n passiert hat und zurückgesendet wurde in Richtung Lokalbusmaster 3.

Dem Fachmann sind aber auch noch andere Felder bekannt, die in einen Kopfteil eines Datenpakets 20 geschrieben werden können, die zur Steuerung oder Fehlererkennung durch die Datenbusteilnehmer 7a, 7b, ..., 7n genutzt werden können.

Der Informationsteil des Datenpakets 20 kann zu Beginn der Prozessdaten oder vor den Prozessdaten einen Instruktionslistenindex 22, ILI, aufweisen welcher angibt, welche Instruktionsliste 17a/b, 18a/b, 19a/b die Datenbusteilnehmer 7a, 7b, ..., 7n verwenden sollen. Der Instruktionslistenindex 22 ist von dem IDE 21 konstant beabstandet und somit an einer vorbestimmten Stelle innerhalb des Datenpakets 20 angeordnet. Alternativ zu dem Ausführungsbeispiel in FIG. 3 kann der Instruktionslistenindex 22 auch unmittelbar an den IDE 21 angrenzen oder relativ zu einem anderen eindeutig identifizierbaren Feld des Datenpakets 20 fest positioniert sein. Dies ermöglicht dem Datenbusteilnehmer 7a, 7b, ..., 7n vorteilhafterweise den Instruktionslistenindex 22 anhand seiner Anordnung im Datenpaket 20 zu ermitteln und auszulesen.

Der Instruktionslistenindex 22 kann dabei beispielsweise im Normalbetrieb des Ringbusses 6 vorgesehen sein, dass alle Datenbusteilnehmer 7a, 7b, ..., 7n ihre erste Instruktionsliste 17a, 18a, 19a verwenden, wohingegen im Fehlerfall die zweite Instruktionsliste 17b, 18b, 19b verwendet werden soll.

Der Informationsteil (*engl.* payload) weist des Weiteren die eigentlichen Prozessdaten P1, P2 und P3 auf. Diese Prozessdaten P1, P2, P3 sind in dem hier gezeigten Ausführungsbeispiel mit unterschiedlichen Mustern gezeigt. In dem hier gezeigten Ausführungsbeispiel sind die Prozessdaten P1 für den Datenbusteilnehmer 7a im Ringbus 6 bestimmt, die Prozessdaten P2 sind für den Datenbusteilnehmer 7b im Ringbus 6 bestimmt und die Prozessdaten P3 sind für den Datenbusteilnehmer 7n im Ringbus 6 bestimmt. Bestimmt heißt in diesem Zusammenhang, dass die jeweiligen Prozessdaten P1, P2, P3 dazu geeignet sind von dem Datenbusteilnehmer 7a, 7b, ..., 7n für den sie bestimmt sind, dazu verwendet zu werden, an genau diesem Datenbusteilnehmer 7a, 7b, ..., 7n z.B. eine Steuerung, Regelung oder Auswertung durchzuführen. In einer alternativen Ausführung können Prozessdaten P1, P2, P3 auch für zwei Datenbusteilnehmer 7a, 7b, ... 7n bestimmt sein.

Des Weiteren weist das Datenpaket 20 im Informationsteil noch ein Feld 23 auf, welches als Zählerwert ausgestaltet sein kann, und welches von jedem Datenbusteilnehmer 7a, 7b,..., 7n durch welchen das Datenpaket 20 - beziehungsweise der den Zählerwert enthaltenen Teil des Datenpakets 20 - bereits geleitet wurde inkrementiert oder dekrementiert werden kann. Damit ist es dem Lokalbusmaster 3 möglich zu überprüfen, ob das Datenpaket 20 von allen Datenbusteilnehmern 7a, 7b, ..., 7n verarbeitet worden ist.

Des Weiteren kann das Datenpaket 20 auch einen Prüfteil aufweisen, mit dem eine zyklische Redundanzprüfung (*engl.* cyclic redundancy check, CRC) durchgeführt werden kann.

Durch die Programmierung der Datenbusteilnehmer 7a, 7b, ..., 7n mit Instruktionslisten 17, 18, 19 und der Möglichkeit mit jedem Datenpaket 20 die Datenbusteilnehmer 7a, 7b, ..., 7n anzuweisen eine spezielle dem gewünschten Betriebsmodus entsprechende Instruktionsliste 17a/b, 18a/b, 19a/b zu verwenden, ist eine einfache Möglichkeit geschaffen, mit der das Verhalten eines Ringbusses 6 während des Betriebs geändert werden kann.

Somit ist es durch die Ringbusstruktur 6 unter Verwendung der Instruktionslistenindexe und der Instruktionslisten 17, 18, 19 möglich, eine dezentrale Bearbeitung der Prozessdaten P1, P2, P3 durch die Datenbusteilnehmer 7a, 7b, ..., 7n bei zugleich zentralisierter Verarbeitung und Steuerung durch den Lokalbusmaster 3 bereitzustellen. Der Lokalbusmaster 3 als zentrales Element steuert über den Instruktionslistenindex und die zuvor programmierten Instruktionslisten 17, 18, 19 die einzelnen Datenbusteilnehmer 7a, 7b, ..., 7n derart an, dass eine Gesamtverarbeitung der Prozessdaten P1, P2, P3 durch alle Datenbusteilnehmer 7a, 7b, ..., 7n des Ringbusses 6 erfolgt. Zusätzlich können die einzelnen Datenbusteilnehmer 7a, 7b, ..., 7n eine eigene Intelligenz, zum Beispiel einen Mikrocontroller aufweisen, insbesondere zur Kommunikation, d.h. zur Kommunikation ohne Prozessdaten P1, P2, P3, beispielweise zur Programmierung der Instruktionslisten 17, 18, 19.

Figur 4 zeigt eine schematische Darstellung eines Datenpakets 24 zum Programmieren eines Datenbusteilnehmers 7a, 7b, ..., 7n. Dieses Datenpaket 24 kann auch als Kommunikationsdatenpaket bezeichnet werden und kann während einer laufenden Kommunikation eingefügt werden, um einem Datenbusteilnehmer 7a, 7b, ..., 7n eine Instruktionsliste 17, 18, 19 zu senden. Das Datenpaket 24 kann dabei in einer Abfolge von Datenpaketen der laufenden zyklischen Kommunikation eingebettet werden und zur Programmierung eines Datenbusteilnehmers 7a, 7b, ..., 7n verwendet werden. Die Programmierung des einen Datenbusteilnehmers 7a, 7b, ..., 7n findet dabei mit Hilfe von Instruktionslisteninformation statt, die in dem Datenpaket 24 an den zu programmierenden Datenbusteilnehmer 7a, 7b, ..., 7n gesendet wird.

Das Datenpaket 24 besteht dabei aus einem allgemeinen Kopfteil, einem Informationsteil und einem Prüfsummenteil. Der Kopfteil beinhaltet ein Feld 25, welches ein eindeutiges nur einmal auftretendes Bitmuster MWR enthält, welches auch als Codewort oder Kennung bezeichnet werden kann. Die Datenbusteilnehmer 7a, 7b, ..., 7n haben die Kenntnis, dass wenn das Bitmuster MWR auftritt, Daten den Datenbusteilnehmern 7a, 7b, ..., 7n zur Verfügung gestellt werden. Dabei können diese Daten eben die Instruktionslisten 17, 18, 19 für die Datenbusteilnehmer 7a, 7b, ..., 7n sein, um die Datenbusteilnehmer 7a, 7b, ..., 7n zu programmieren. Der Kopf des Datenpakets 24 kann auch noch weitere Informationen enthalten, die zur Steuerung oder Fehlererkennung nötig sind - hier nicht gezeigt.

Der Informationsteil des Datenpakets 24 beinhaltet ein Feld 26, in dem die Adresse des anzusprechenden Datenbusteilnehmers 7a, 7b, ..., 7n hinterlegt ist. Nur der Datenbusteilnehmer 7a, 7b, ..., 7n, dessen Adresse mit der in dem Feld 26 hinterlegten Adresse übereinstimmt, liest die Instruktionslistendaten 28 des Informationsteils des Datenpakets 24. Der Informationsteil kann auch noch ein weiteres Feld 27 aufweisen, welches von dem entsprechenden Datenbusteilnehmer 7a, 7b, ..., 7n, dessen Adresse in Feld 26 hinterlegt ist, verwendet werden kann zur Fehlererkennung, Fehlerpropagierung, oder dieses Feld 27 kann Anweisungen enthalten, wohin die Instruktionslistendaten 28 gespeichert werden sollen. Die Instruktionslistendaten 28 können zumindest eine Instruktionsliste 17, 18, 19 oder mehrere Instruktionslisten beinhalten. Nach Abspeicherung der zumindest einen Instruktionsliste 17, 18, 19 in den jeweiligen Datenbusteilnehmern 7a, 7b, ..., 7n kann auch davon gesprochen werden, dass die Programmierung des Datenbusteilnehmers 7a, 7b, ..., 7n erfolgt ist. Die Instruktionslisten 17, 18, 19 weisen dabei Sätze von Instruktionen auf, die die von den Datenbusteilnehmern 7a, 7b, ..., 7n durchzuführende Verarbeitung definieren. Des Weiteren kann das Datenpaket 24 auch noch einen Prüfsummenteil aufweisen, mit dem eine zyklische Redundanzprüfung durchgeführt werden kann.

Die Instruktionslisten 17, 18, 19 und der Instruktionslistenindex erlauben auch während des Betriebs einen neu hinzugefügten Datenbusteilnehmer zu programmieren ohne dabei den Betrieb unterbrechen zu müssen. Dabei muss beispielsweise nur in die zyklische Kommunikation ein Kommunikationsdatenpaket 24 eingebettet werden, welches es erlaubt den neuen Datenbusteilnehmer mit einer Instruktionsliste 17, 18, 19 zu programmieren. Wird beispielsweise ein Datenbusteilnehmer dem Ringbus 6 hinzugefügt, so kann dieser sich beim Lokalbusmaster 3 identifizieren. Der Lokalbusmaster 3 wird dann einen ungenutzten Instruktionslistenindex reservieren und für den neuen Datenbusteilnehmer eine oder mehrere Instruktionslisten erzeugen. Ebenfalls wird der Lokalbusmaster 3 Instruktionslisten in den übrigen Datenbusteilnehmer 7a, 7b, ..., 7n des Ringbusses programmieren, die dem neuen, bisher ungenutzten Instruktionslistenindex zugeordnet werden. Während dieser Programmierung läuft der Prozess mit einem bisher verwendeten Instruktionslistenindex weiter, wobei der neu hinzugefügte Datenbusteilnehmer noch keine Prozessdaten P1, P2, P3 bearbeiten kann.

Bei dem in Figur 2 gezeigten Beispiel haben die Datenbusteilnehmer 7a, 7b, ..., 7n jeweils zwei Instruktionslisten 17a/b, 18a/b und 19a/b, dementsprechend ist der Instruktionslistenindex "eins" und "zwei" bereits verwendet. Ein ungenutzter Instruktionslistenindex ist dementsprechend "drei". Die neu erzeugte eine oder mehrere Instruktionslisten werden dann dem neuen Datenbusteilnehmer mittels eines Kommunikationsdatenpakets 24 zugesandt und mit dem ungenutzten Instruktionslistenindex aufgefunden werden. Dies kann beispielsweise bedeuten, dass die zumindest eine neue Instruktionsliste an der dritten Position im Speicher des neu hinzugefügten Datenbusteilnehmers hinterlegt wird. Alternativ kann die neue Instruktionsliste auch beliebig im Speicher des neu hinzugefügten Datenbusteilnehmers hinterlegt werden, in diesem Fall wird aber ein Verweis erstellt, der auf die Position im Speicher der neuen Instruktionsliste hinweist. Dabei entspricht beispielsweise der Index des Verweises dem ungenutzten Instruktionslistenindex.

Die übrigen (bisherigen) Datenbusteilnehmer 7a, 7b, ..., 7n können in diesem Zuge auch programmiert werden. Dabei kann der Lokalbusmaster 3 den Datenbusteilnehmern 7a, 7b, ..., 7n beispielsweise mittels Kommunikationsdatenpaketen auch jeweils eine "dritte" Instruktionsliste senden, die entsprechend in den Datenbusteilnehmer 7a, 7b, ..., 7n abgespeichert wird. Dabei kann sich die dritte Instruktionsliste von den bisherigen unterscheiden. Alternativ zur Programmierung aller Datenbusteilnehmer 7a, 7b, ..., 7n mit einer "dritten" Instruktionsliste können die übrigen Datenbusteilnehmer 7a, 7b, ..., 7n auch angewiesen werden, einen Verweis zu erstellen, der durch den bis dahin noch nicht genutzten Instruktionslistenindex auffindbar ist und der auf die momentan verwendete Instruktionsliste 17a/b, 18a/b, und 19a/b hinweist.

Mit dem nächsten Prozessdatenpaket 20 kann der Lokalbusmaster 3 dann allen Datenbusteilnehmer 7a, 7b, ..., 7n einen Instruktionslistenindex senden, der auf die "dritte" Instruktionsliste hinweist. Auf diese Weise ist eine nahtlose Einbindung des neu hinzugefügten Datenbusteilnehmers möglich, ohne dass es zu signifikanten Unterbrechungen der Kommunikation auf dem Ringbus 6 kommt. Es kann also mittels des Instruktionslistenindexes nahtlos umgeschaltet werden.

Das Hinzufügen und Entfernen von Instruktionslisten 17, 18, 19 für verschiedene Betriebsmodi des unveränderten Ringbusses 6 ist auf ähnliche Weise während des Betriebs möglich. Zunächst wird ein ungenutzter Instruktionslistenindex identifiziert, also ein Instruktionslistenindex dem keine Instruktionsliste 17, 18, 19 zugeordnet ist. Dieses Identifizieren kann der Lokalbusmaster 3 ausführen, der beispielsweise Informationen besitzt, welche Instruktionslisten in den einzelnen Datenbusteilnehmern 7a, 7b, ..., 7n gespeichert sind und über welche Instruktionslistenindexe diese auffindbar sind. Nach der Identifizierung werden neue Instruktionslisten erzeugt. Die neuen Instruktionslisten werden dann den Datenbusteilnehmern 7a, 7b, ...,7n, die eine neue Instruktionsliste bekommen sollen, zugesandt, beispielsweise mit entsprechenden Kommunikationsdatenpaketen 24. Die neuen Instruktionslisten werden dann an einer Position gespeichert, die mit dem unbenutzten Instruktionslistenindex auffindbar ist oder die über einen Verweis auffindbar ist. Danach kann der Lokalbusmaster 3 allen Datenbusteilnehmer 7a, 7b, ..., 7n einen Instruktionslistenindex senden, der auf die neuen Instruktionslisten zeigt. Auf diese Weise ist ein nahtloser Übergang auch während des Betriebs möglich.

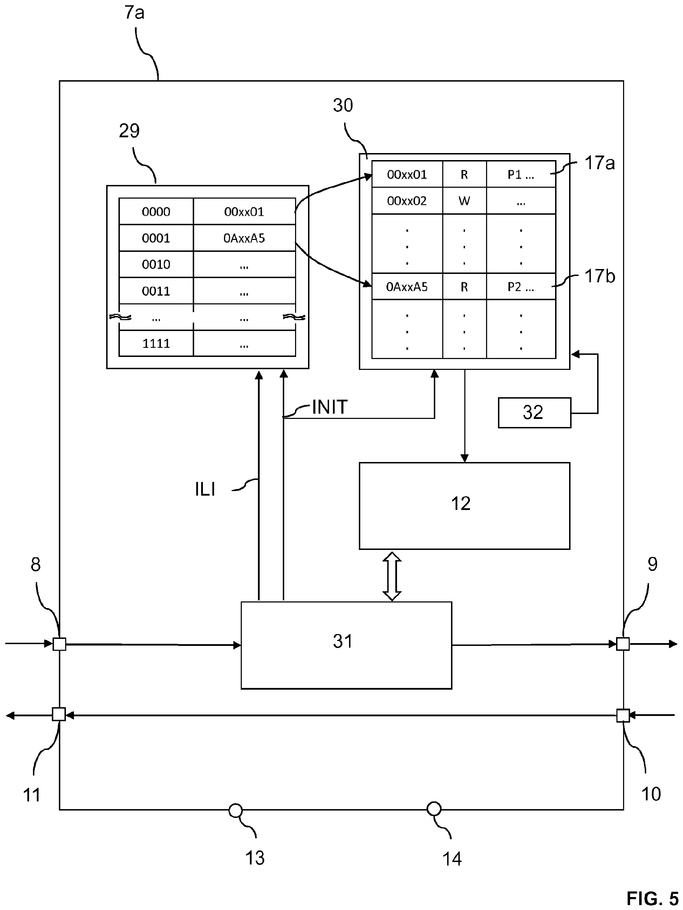

Figur 5 zeigt schematisch einen Datenbusteilnehmer 7a. Der Datenbusteilnehmer 7a ist hier nur exemplarisch gezeigt und es soll verstanden werden, dass die übrigen Datenbusteilnehmer 7b, ..., 7n den gleichen Aufbau aufweisen können. Der Datenbusteilnehmer 7a weist Schnittstelle 8 zum Empfangen und Schnittstelle 9 zum Senden von Datenpaketen 20, 24 beziehungsweise Teilen der Datenpakete 20, 24 in Abwärtsrichtung, also vom Lokalbusmaster 3 weg, sowie die Schnittstellen 10 und 11 zum Weiterleiten der Datenpakete 20, 24 beziehungsweise Teilen der Datenpakete 20, 24 in Aufwärtsrichtung, also zum Lokalbusmaster 3 hin, auf. Wie in dem hier gezeigten Ausführungsbeispiel gezeigt, findet eine Verarbeitung nur in Abwärtsrichtung statt nicht aber in Aufwärtsrichtung. Dies wird angedeutet durch die direkte Verbindung zwischen den Schnittstellen 10 und 11.

Der Datenbusteilnehmer 7a verfügt in dem hier gezeigten Ausführungsbeispiel über eine Umsetzungstabelle 29 (engl. look up table, LUT). Diese Umsetzungstabelle 29 hat in dem hier gezeigten Ausführungsbeispiel zwei Spalten und mehrere Zeilen und ist im Speicher oder Register des Datenbusteilnehmers 7a hinterlegt. Die erste Spalte der Umsetzungstabelle 29 weist in binärer Kodierung den Wertebereich 0 bis 15 auf. Die erste Spalte umfasst dementsprechend die Werte 0000(0), 0001(1), 0010(2), 0011 (3), 0100(4), 0101(5), 0110 (6), 0111(7), 1000(8), 1001(9), 1010(10), 1011(11), 1100 (12), 1101(13), 1110(14), 1111(15). In der zweiten Spalte ist jedem Wert der ersten Spalte eine spezifische Speicheradresse in einem Speicher 30 zugeordnet. Diese Speicheradressen können auch Verweise genannt werden, wobei jeder Verweis über einen spezifischen Wert von 0 bis 15 auffindbar ist.

Der Verweis enthält dementsprechend in dem hier gezeigten Ausführungsbeispiel eine Speicheradresse. Die Speicheradresse weist dabei auf eine Position im Speicher 30 hin, wo eine erste Instruktion einer entsprechenden Instruktionsliste 17a, 17b gespeichert ist. Die nachfolgenden Instruktionen in der Liste werden durch einen Zählerwert 32 ausgewählt, der die Adresse entsprechend hochzählt. So weist beispielsweise der mit dem binären Wert 0000 indizierte Verweis auf die Speicheradresse 00xx01 im Speicher 30 hin. Im Speicher 30 des Datenbusteilnehmers befindet sich an der Speicheradresse 00xx01 die erste Instruktion der Instruktionsliste 17a.

Dabei kann die Instruktionsliste 17a für jedes Symbol beziehungsweise jedes Prozessdatum P1, P2, P3 im Datenpaket (20) eine Instruktion aufweisen. Wenn gewisse Prozessdaten nicht verarbeitet werden sollen, so kann die Instruktionsliste 17a an dieser Stelle eine "SKIP" Instruktion aufweisen. Der Zählerwert 32 deutet an, das wievielte Prozessdatum P1, P2, P3 gerade vom Datenbusteilnehmer 7a, 7b,... 7n verarbeitet wird und dementsprechend weist der Zählerwert 32 auf die Instruktion hin, die gerade aus der Instruktionsliste 17a verwendet wird. Nach der Verarbeitung wird der Zählerwert 32 geändert, so dass bei dem nächsten Prozessdatum P1, P2, P3 die nächste Instruktion aus der Instruktionsliste 17a verwendet wird. Es ist dem Fachmann bewusst, dass die hier angedeuteten Prozessdaten P1, P2, und P3 nur jeweils ein Teil eines Symbols ausfüllen können, wobei das Symbol beispielsweise 8 Bits umfassen kann, also 1 Byte.

Soll die zweite Instruktionsliste 17b verwendet werden, so wird der Verweis über den Instruktionslistenindex angesprochen, der mit dem zweiten binären Wert 0001 indiziert ist und auf die Speicheradresse 0AxxA5 hinweist. Im Speicher 30 des Datenbusteilnehmers befindet sich an der Speicheradresse 0AxxA5 die erste Instruktion der Instruktionsliste 17b. In dem hier gezeigten Ausführungsbeispiel lassen sich also bis zu 16 Verweise indizieren, es lassen sich also bis zu 16 Instruktionslisten im Speicher des Datenbusteilnehmers 7a auffinden, wobei die Instruktionslisten für jedes Prozessdatum P1, P2, P3 jeweils eine Instruktion aufweisen, beziehungsweise für jedes Symbol in welchem die Prozessdaten P1, P2 und P3 enthalten sind eine Instruktion aufweist.

Die Instruktionslisten 17a/17b können dem Datenbusteilnehmer 7a während einer Initialisierungsphase oder während des Betriebs zugesandt worden sein, beispielsweise mit Hilfe eines Kommunikationsdatenpakets 24. Der Datenbusteilnehmer 7a empfängt die Instruktionslisten 17a/b über die Schnittstelle 8, der eine Empfänger-/Sendeschaltung 31 zugeordnet ist. Der Datenbusteilnehmer 7a kann daraufhin angewiesen werden, die Umsetzungstabelle 29 zu erstellen, beziehungsweise für jede neu erhaltene Instruktionsliste 17a/b an einem noch nicht genutzten Platz in der Umsetzungstabelle 29 einen Verweis einzutragen, der auf die Speicheradresse der neu hinzugefügten Instruktionsliste 17a/b verweist. Beispielsweise kann der Datenbusteilnehmer die erste Instruktionsliste 17a empfangen, diese im Speicher 30 ab Position 00xx01 hinterlegen und einen Verweis auf diese Speicheradresse an der ersten Stelle in der Umsetzungstabelle 29 hinterlegen. Der entsprechende Verweis ist demnach mit dem binären Wert 0000 indiziert. Wenn der Datenbusteilnehmer die zweite Instruktionsliste 17b empfängt, so kann der Datenbusteilnehmer 7a diese beispielsweise im Speicher ab Position 0AxxA5 hinterlegen und einen entsprechenden Verweis an der zweiten Stelle in der Umsetzungstabelle 29 hinterlegen. Der entsprechende Verweis ist demnach mit dem binären Wert 0001indiziert.

Während des Betriebs des Datenbusteilnehmers 7a empfängt dieser über die Schnittstelle 8 Teile des Datenpakets 20 an der Empfängerschaltung 31. Ein Teil des Datenpakets20 ist das Instruktionslistenindexfeld 22. Dieses Feld 22 enthält einen Wert, der einer Position in der Umsetzungstabelle 29 entspricht. Beispielsweise kann das Instruktionslistenindexfeld 22 einen binären Wert 0001enthalten. Dieser Wert indiziert den Verweis auf die Speicheradresse 0AxxA5, also verweist auf die zweite Instruktionsliste 17b des Datenbusteilnehmers 7a.

Die Verarbeitungseinheit 12 des Datenbusteilnehmers 7a wird also über das Instruktionslistenindexfeld 22 angewiesen die zweite Instruktionsliste 17b zu verwenden, um Prozessdaten P1, P2, P3,... zu verarbeiten, die dem Instruktionslistenindexfeld 22 folgen.

Der Fachmann wird verstehen, dass auch wenn in diesem Ausführungsbeispiel exemplarisch auf die zweite Instruktionsliste 17b mit Hilfe des Instruktionslistenindexfeldes 22 hingewiesen wurde, das Instruktionslistenindexfeld 22 auch andere Werte annehmen kann und damit andere Verweise indiziert werden, die auf andere Instruktionslisten, die im Speicher 30 vorgehalten werden, hinweisen können.

### Bezugszeichenliste

- 1: speicherprogrammierbare Steuerung (SPS)
- 2: übergeordneter Bus
- 3: Lokalbusmaster
- 4: erste Schnittstelle
- 5a,b: zweite Schnittstelle
- 6: Ringbus
- 7a, b, n: Datenbusteilnehmer
- 8: erste Abwärtsdatenschnittstelle
- 9: zweite Abwärtsdatenschnittstelle
- 10: erste Aufwärtsdatenschnittstelle
- 11: zweite Aufwärtsdatenschnittstelle
- 12: Verarbeitungseinheit
- 13, 14: Ein-/Ausgänge
- 15: Sensor
- 16: Aktor
- 17, 18, 19: Instruktionslisten

- 20: Prozessdatenpaket
- 21: IDE Codewort
- 22: Instruktionslistenindex
- P1, P2, P3: Prozessdaten
- 23: Zählerwert
- 24: Kommunikationsdatenpaket
- 25: MWR Codewort
- 26: Adressfeld
- 27: weiteres Feld
- 28: Instruktionslistendaten
- 29: Umsetzungstabelle
- 30: Speicher
- 31: Empfängerschaltung
- 32: Zählerwert

## Patentansprüche

1. Ein Verfahren zur Verarbeitung von Prozessdaten (P1, P2, P3) durch Datenbusteilnehmer (7a, 7b, ..., 7n) eines Lokalbusses (6), das Verfahren aufweisend:
Empfangen von zumindest zwei Instruktionslisten (17, 18, 19) an einem Datenbusteilnehmer (7a, 7b, ..., 7n), wobei jede Instruktionsliste (17, 18, 19) einen Satz von Instruktionen zum Verarbeiten von Prozessdaten (P1, P2, P3) aufweist;
Speichern der zumindest zwei Instruktionslisten (17, 18, 19) in einem Speicher (25);
Empfangen von einem Instruktionslistenindex, ILI, und zu verarbeitenden Prozessdaten (P1, P2, P3) an dem Datenbusteilnehmer (7a, 7b, ..., 7n);
Auswählen einer der zumindest zwei gespeicherten Instruktionslisten (17, 18, 19) basierend auf dem empfangenen ILI, wenn der ILI der gespeicherten Instruktionsliste (17, 18, 19) zugeordnet ist; und
Ausführen des Satzes von Instruktionen der ausgewählten Instruktionsliste (17, 18, 19) zum Verarbeiten der Prozessdaten (P1, P2, P3) durch den Datenbusteilnehmer (7a, 7b, ..., 7n).

2. Das Verfahren nach Anspruch 1, wobei das Speichern der zumindest zwei Instruktionslisten (17, 18, 19) aufweist:
Erstellen eines Verweises auf die jeweilige gespeicherte Instruktionsliste (17, 18, 19) und/oder
Speichern der zumindest zwei Instruktionslisten (17, 18, 19) an einem jeweils vorher bestimmten Speicherplatz in dem Speicher (25).

3. Das Verfahren nach einem der vorhergehenden Ansprüche, wobei der ILI auf einen Speicherplatz hinweist in dem eine der zumindest zwei Instruktionslisten (17, 18, 19) gespeichert ist oder auf einen Verweis hinweist, der auf den Speicherplatz der einen Instruktionsliste (17, 18, 19) zeigt.

4. Das Verfahren nach einem der vorhergehenden Ansprüche, wobei die zumindest eine Instruktionsliste (17, 18, 19) am Datenbusteilnehmer (7a, 7b, ..., 7n) von einem Lokalbusmaster (3) des Lokalbusses (6) empfangen wird.

5. Das Verfahren nach einem der vorhergehenden Ansprüche, wobei der ILI vor den Prozessdaten (P1, P2, P3) empfangen wird.

6. Das Verfahren nach einem der vorhergehenden Ansprüche, wobei die Prozessdaten (P1, P2, P3) empfangen werden in einem Datenpaket (20).

7. Das Verfahren nach 6, wobei das Datenpaket (20) den ILI und die Prozessdaten (P1, P2, P3) enthält.

8. Das Verfahren nach einem der Ansprüche 6 und 7, wobei das Datenpaket (20) in einem Zyklusrahmen angeordnet ist.

9. Das Verfahren nach einem der vorhergehenden Ansprüche, wobei jeder Instruktionsliste (17, 18, 19) nur ein eindeutiger ILI zugeordnet ist.

10. Ein Datenbusteilnehmer (7a, 7b, ..., 7n) eines Lokalbusses (6), der Datenbusteilnehmer (7a, 7b, ..., 7n) aufweisend:
ein Mittel zum Empfangen (26) von zumindest zwei Instruktionslisten (17, 18, 19), wobei jede Instruktionsliste (17, 18, 19) einen Satz von Instruktionen zum Verarbeiten von Prozessdaten (P1, P2, P3) aufweist und zum Empfangen von einem Instruktionslistenindex, ILI, und zu verarbeitenden Prozessdaten (P1, P2, P3);
ein Mittel zum Speichern (25) der zumindest zwei Instruktionslisten (17, 18, 19);
ein Mittel zum Auswählen (24) einer der zumindest zwei gespeicherten Instruktionslisten (17, 18, 19) basierend auf dem empfangenen ILI, wenn der ILI der gespeicherten Instruktionsliste (17, 18, 19) zugeordnet ist; und
ein Mittel zum Ausführen (12) des Satzes von Instruktionen der ausgewählten Instruktionsliste (17, 18, 19) zur Verarbeitung der Prozessdaten (P1, P2, P3).

11. Der Datenbusteilnehmer (7a, 7b, ..., 7n) nach Anspruch 10, wobei das Verarbeiten der Prozessdaten (P1, P2, P3) basierend auf dem Satz von Instruktionen der ausgewählten Instruktionsliste (17, 18, 19) zumindest umfasst lesen und/oder schreiben von Prozessdaten (P1, P2, P3).

12. Der Datenbusteilnehmer (7a, 7b, ..., 7n) nach einem der Ansprüche 10 oder 11, wobei jeder Instruktionsliste (17, 18, 19) nur ein eindeutiger ILI zugeordnet ist.

13. Ein Lokalbussystem, aufweisend:
einen Lokalbusmaster (3);
zumindest einem Datenbusteilnehmer (7a, 7b, ..., 7n) eines Lokalbusses (6) nach einem der Ansprüche 10 bis 12,
wobei der Lokalbusmaster (3) aufweist:
ein Mittel zum Erzeugen eines Datenpakets (20) mit einem Instruktionslistenindex, ILI, und Prozessdaten (P1, P2, P3); und
ein Mittel zum Übertragen des Datenpakets (20) an den zumindest einen Datenbusteilnehmer (7a, 7b, ..., 7n).

14. Das Lokalbussystem nach Anspruch 13, wobei der Lokalbusmaster (3) weiter aufweist:
ein Mittel zum Erzeugen von zumindest zwei Instruktionslisten (17, 18, 19) für den zumindest einen Datenbusteilnehmer (7a, 7b, ..., 7n); und
ein Mittel zum Übertragen der Instruktionslisten (17, 18, 19) an den zumindest einen Datenbusteilnehmer (7a, 7b, ..., 7n).

15. Das Lokalbussystem nach einem der Ansprüche 13 oder 14, wobei der Lokalbusmaster (3) weiter aufweist:
ein Mittel zum Erkennen, dass zumindest einem ILI keine Instruktionsliste (17, 18, 19) zugeordnet ist; und
ein Mittel zum Zuordnen des einen ILIs an genau eine Instruktionsliste (17, 18, 19).

## Claims

1. A method for processing process data (P1, P2, P3) by data bus subscribers (7a, 7b, ..., 7n) of a local bus (6), the method comprising:
receiving at least two instruction lists (17, 18, 19) at a data bus subscriber (7a, 7b, ..., 7n), each instruction list (17, 18, 19) comprising a set of instructions for processing process data (P1, P2, P3);
storing the at least two instruction lists (17, 18, 19) in a memory (25);
receiving an instruction list index, ILI, and process data (P1, P2, P3) to be processed at the data bus subscriber (7a, 7b, ..., 7n);
selecting one of the at least two stored instruction lists (17, 18, 19) based on the received ILI when the ILI is associated with the stored instruction list (17, 18, 19); and
executing the set of instructions of the selected instruction list (17, 18, 19) for processing the process data (P1, P2, P3) by the data bus subscriber (7a, 7b, ..., 7n).

2. The method according to claim 1, wherein the storing the at least two instruction lists (17, 18, 19) comprises:
creating a reference to the respective stored instruction list (17, 18, 19) and/or
storing the at least two instruction lists (17, 18, 19) at a respective predetermined storage location in the memory (25).

3. The method according to any of the preceding claims, wherein the ILI points to a memory location in which one of the at least two instruction lists (17, 18, 19) is stored or points to a reference, which shows to the memory location of the one instruction list (17, 18, 19).

4. The method according to any of the preceding claims, wherein the at least one instruction list (17, 18, 19) is received at the data bus subscriber (7a, 7b, ..., 7n) by a local bus master (3) of the local bus (6).

5. The method according to any of the preceding claims, wherein the ILI is received before the process data (P1, P2, P3).

6. The method according to any of the preceding claims, wherein the process data (P1, P2, P3) is received in a data packet (20).

7. The method according to claim 6, wherein the data packet (20) contains the ILI and the process data (P1, P2, P3).

8. The method according to any of claims 6 and 7, wherein the data packet (20) is arranged in a cycle frame.

9. The method according to any of the preceding claims, wherein each instruction list (17, 18, 19) is assigned only one unique ILI.

10. A data bus subscriber (7a, 7b, ..., 7n) of a local bus (6), the data bus subscriber (7a, 7b, ..., 7n) comprising:
means for receiving (26) at least two instruction lists (17, 18, 19), each instruction list (17, 18, 19) comprising a set of instructions for processing process data (P1, P2, P3) and for receiving an instruction list index, ILI, and process data (P1, P2, P3) to be processed;
means for storing (25) the at least two instruction lists (17, 18, 19);
means for selecting (24) one of the at least two stored instruction lists (17, 18, 19) based on the received ILI when the ILI is associated with the stored instruction list (17, 18, 19); and
means for executing (12) the set of instructions of the selected instruction list (17, 18, 19) for processing the process data (P1, P2, P3).

11. The data bus subscriber (7a, 7b, ..., 7n) according to claim 10, wherein processing the process data (P1, P2, P3) based on the set of instructions of the selected instruction list (17, 18, 19) comprises at least reading and/or writing of process data (P1, P2, P3).

12. The data bus subscriber (7a, 7b, ..., 7n) according to any of claims 10 or 11, wherein each instruction list (17, 18, 19) is assigned only one unique ILI.

13. A local bus system, comprising:
a local bus master (3);
at least one data bus subscriber (7a, 7b, ..., 7n) of a local bus (6) according to any of claims 10 to 12,
wherein the local bus master (3) comprises:
means for generating a data packet (20) with an instruction list index, ILI, and process data (P1, P2, P3); and
means for transmitting the data packet (20) to the at least one data bus subscriber (7a, 7b, ..., 7n).

14. The local bus system according to claim 13, wherein the local bus master (3) further comprises:
means for generating at least two instruction lists (17, 18, 19) for the at least one data bus subscriber (7a, 7b, ..., 7n); and
means for transmitting the instruction lists (17, 18, 19) to the at least one data bus subscriber (7a, 7b, ..., 7n).

15. The local bus system according to any of claims 13 or 14, wherein the local bus master (3) further comprises:
means for detecting that at least one ILI is not assigned an instruction list (17, 18, 19); and
means for assigning the one ILI to exactly one instruction list (17, 18, 19).

## Revendications

1. Un procédé pour traiter des données de processus (P1, P2, P3) par l'intermédiaire de participants de bus de données (7a, 7b, ..., 7n) d'un bus local (6), le procédé comprenant :
réception d'au moins deux listes d'instructions (17, 18, 19) au niveau d'un participant de bus de données (7a, 7b, ..., 7n), chaque liste d'instructions (17, 18, 19) comportant un jeu d'instructions pour traiter des données de processus (P1, P2, P3) ;
mémorisation des au moins deux listes d'instructions (17, 18, 19) dans une mémoire (25) ;
réception d'un index de listes d'instructions, ILI, et de données de processus à traiter (P1, P2, P3) au niveau du participant de bus de données (7a, 7b, ..., 7n) ;
sélection d'une des au moins deux listes d'instructions mémorisées (17, 18, 19) sur la base du ILI reçu si le ILI est associé à la liste d'instructions mémorisée (17, 18, 19) ; et
exécution du jeu d'instructions de la liste d'instructions sélectionnée (17, 18, 19) pour traiter des données de processus (P1, P2, P3) par l'intermédiaire du participant de bus de données (7a, 7b, ..., 7n) .

2. Le procédé selon la revendication 1, la mémorisation des au moins deux listes d'instructions (17, 18, 19) comprenant :
création d'une référence à la liste d'instructions mémorisée respective (17, 18, 19) et/ou mémorisation des au moins deux listes d'instructions (17, 18, 19) dans un espace mémoire respectivement prédéterminé dans la mémoire (25).

3. Le procédé selon une des revendications précédentes, le ILI renvoyant à un espace mémoire dans lequel une des au moins deux listes d'instructions (17, 18, 19) est mémorisée ou renvoyant à une référence qui désigne l'espace mémoire de la une liste d'instructions (17, 18, 19).

4. Le procédé selon une des revendications précédentes, la au moins une liste d'instructions (17, 18, 19) étant reçue au niveau du participant de bus de données (7a, 7b, ..., 7n) par un maître de bus local (3) du bus local (6) .

5. Le procédé selon une des revendications précédentes, le ILI étant reçu avant les données de processus (P1, P2, P3).

6. Le procédé selon une des revendications précédentes, les données de processus (P1, P2, P3) étant reçues dans un paquet de données (20).

7. Le procédé selon la revendication 6, le paquet de données (20) contenant le ILI et les données de processus (P1, P2, P3).

8. Le procédé selon une des revendications 6 et 7, le paquet de données (20) étant disposé dans un cadre cyclique.

9. Le procédé selon une des revendications précédentes, à chaque liste d'instructions (17, 18, 19) n'étant associé qu'un ILI univoque.

10. Un participant de bus de données (7a, 7b, ..., 7n) d'un bus local (6), le participant de bus de données (7a, 7b, ..., 7n) comprenant :
un moyen pour recevoir (26) au moins deux listes d'instructions (17, 18, 19), chaque liste d'instructions (17, 18, 19) comportant un jeu d'instructions pour traiter des données de processus (P1, P2, P3) et pour recevoir un index de listes d'instructions, ILI, et des données de processus à traiter (P1, P2, P3) ;
un moyen de mémorisation (25) des au moins deux listes d'instructions (17, 18, 19) ;
un moyen de sélection (24) d'une des au moins deux listes d'instructions mémorisées (17, 18, 19) sur la base du ILI reçu si le ILI est associé à la liste d'instructions mémorisée (17, 18, 19) ; et
un moyen d'exécution (12) du jeu d'instructions de la liste d'instructions sélectionnée (17, 18, 19) pour traiter les données de processus (P1, P2, P3).

11. Le participant de bus de données (7a, 7b, ..., 7n) selon la revendication 10, le traitement des données de processus (P1, P2, P3) sur la base du jeu d'instructions de la liste d'instructions sélectionnée (17, 18, 19) incluant au moins la lecture et/ou l'écriture de données de processus (P1, P2, P3).

12. Le participant de bus de données (7a, 7b, ..., 7n) selon une des revendications 10 ou 11, à chaque liste d'instructions (17, 18, 19) n'étant associé qu'un ILI univoque.

13. Un système de bus local, comprenant :
un maître de bus local (3) ;
au moins un participant de bus de données (7a, 7b, ..., 7n) d'un bus local (6) selon une des revendications 10 à 12,
le maître de bus local (3) comprenant :
un moyen de génération d'un paquet de données (20) avec un index de listes d'instructions, ILI, et des données de processus (P1, P2, P3) ; et
un moyen de transmission du paquet de données (20) au au moins un participant de bus de données (7a, 7b, ..., 7n).

14. Le système de bus local selon la revendication 13, le maître de bus local (3) comportant en outre :
un moyen de génération d'au moins deux listes d'instructions (17, 18, 19) pour le au moins un participant de bus de données (7a, 7b, ..., 7n) ; et
un moyen de transmission des listes d'instructions (17, 18, 19) au au moins un participant de bus de données (7a, 7b, ..., 7n) .

15. Le système de bus local selon une des revendications 13 ou 14, le maître de bus local (3) comprenant en outre :
un moyen de détection qu'à au moins un ILI n'est associée aucune liste d'instructions (17, 18, 19) ; et
un moyen d'association du un ILI à exactement une liste d'instructions (17, 18, 19).
